# EUROPEAN PATENT SPECIFICATION

(11) **EP 3 142 312 B1**
(45) Date of publication and mention of the grant of the patent: **14.11.2018**
(21) Application number: 14894461.4
(22) Date of filing: 15.09.2014
(51) Int. Cl.: H04B 10/07, H04J 14/02

(54) **METHODS AND APPARATUSES FOR PROCESSING UPSTREAM DATA ANOMALY**
VERFAHREN UND VORRICHTUNGEN ZUR VERARBEITUNG VON UPSTREAM-DATENANOMALIEN
PROCÉDÉS ET APPAREILS DE TRAITEMENT D'UNE ANOMALIE DE DONNÉES MONTANTES

(30) Priority: 09.06.2014 CN 201410253527
(43) Date of publication of application: 15.03.2017
(73) Proprietor: ZTE Corporation, Shenzhen, Guangdong 518057 (CN)
(72) Inventor: GENG, Dan, Shenzhen Guangdong 518057 (CN); ZHANG, Weiliang, Shenzhen Guangdong 518057 (CN); ZHANG, Dezhi, Shenzhen Guangdong 518057 (CN)
(74) Representative: HGF Limited
(86) International application number: PCT/CN2014/086555
(87) International publication number: WO 2015/188485

(56) References cited:
- CN-A- 101 127 566
- CN-A- 101 841 738
- CN-A- 102 104 813
- DAN GENG ZTE CORPORATION P R CHINA: "Rogue ONU consideration for TWDM-PON;C 0682", ITU-T DRAFT ; STUDY PERIOD 2013-2016, INTERNATIONAL TELECOMMUNICATION UNION, GENEVA ; CH, vol. 2/15, 11 March 2014 (2014-03-11), pages 1-3, XP044075221, [retrieved on 2014-03-11]

## Description

### Technical Field

The present invention relates to the field of communications, and more particularly, to a method and apparatus for processing abnormal uplink data.

### Background of the Related Art

With the development of network technology, network can be used to send a large number of voice, data, video and other services, therefore, the requirements for bandwidth are continuously increasing, and the Passive Optical Network (referred to as PON for short) is generated in such demand.

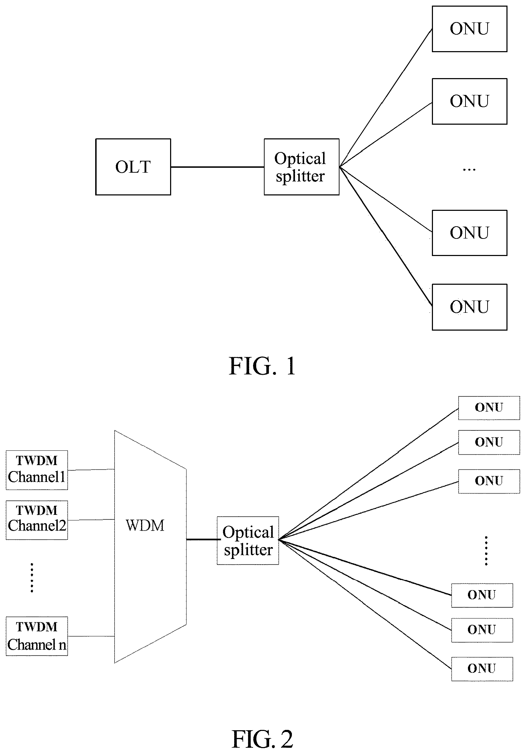

FIG. 1 is a topological structure diagram of a PON system in the related art. As shown in FIG. 1, the PON system generally consists of an Optical Line Terminal (referred to as OLT for short) at the central office side, an Optical Network Unit (referred to as ONU for short) at the user side, and an Optical Distribution Network (referred to as ODN for short), and usually a point-to-multipoint network structure is adopted. The ODN consists of passive optical components such as single-mode optical fiber, an optical splitter and optical connectors, and provides an optical transmission medium for physical connection between the OLT and the ONU. To further enhance the bandwidth of the network, currently multiple wavelengths are transmitted in backbone optical fiber in the PON technology, known as a Time Wavelength Division Multiplexing (referred to as TWDM for short) PON system.

FIG. 2 is a topological structure diagram of a TWDM PON system in the related art. As shown in FIG. 2, there is a plurality of TWDM channels in the TWDM system, and each TWDM channel includes one downlink wavelength channel and one or more uplink wavelength channels. Each TWDM channel manages a group of ONUs, one group of ONUs uses the same uplink wavelength for sending uplink data and the same downlink wavelength for receiving downlink data, and different ONUs in the one group of ONUs transmit uplink data through the time division multiplexing mode. The downlink wavelengths of different TWDM channels are different, and the uplink wavelengths used by various groups of ONUs managed by different OLTs are also different. Each ONU sends the uplink data within a specific uplink time slot according to a command of the OLT.

In order to achieve load balancing, energy saving and reducing the inventory type of ONUs, the sending wavelength and receiving wavelength of the ONUs in the TWT PON system can be tuned. The OLT can command an ONU to tune the working wavelength, and therefore the ONU can work in any TWDM channel. When an uplink wavelength of the ONU drifts spontaneously, or an uplink wavelength tuning error occurs, the downlink wavelength remains on the correct downlink wavelength channel, and when the uplink wavelength drifts out of the current working TWDM channel, the ONU can receive uplink bandwidth allocation and send data at the wrong uplink wavelength. If the ONU sends uplink data on other TWDM channels having uplink transmission data, it will lead to conflict in the uplink data on the other TWDM channels, and the OLT cannot correctly parse the uplink data on the TWDM channels.

Therefore, in the related art, there is the problem that an ONU sends data on a wrong uplink wavelength channel to cause uplink data interference on the uplink wavelength channel.

The document DAN GENG ZTE CORPORATION P. R. CHINA: "Rogue ONU consideration for TWDM-PON; C 0682" discloses in the case of spontaneous upstream wavelength transmission drift, there are two drift possibilities. One is that ONU's upstream transmission wavelength drifts slightly and smoothly. The other is that ONU's upstream transmission wavelength hops out of control of the OLT's fine tuning capability.

### Summary of the Invention

In order to solve the problem in the related art that an ONU sends data on a wrong uplink wavelength channel to cause uplink data interference on the uplink wavelength channel, methods and apparatuses according to independent claims are provided. Further improvements and embodiments are provided in the dependent claims.

Provided is a method for processing abnormal uplink data, including: a first TWDM channel terminal in a TWDM PON detecting abnormal uplink data; the first TWDM channel terminal sending uplink data abnormality information to other TWDM channel terminals in the TWDM PON, herein, the uplink data abnormality information is used for the other TWDM channel terminals detecting whether uplink data sent by an ONU managed by the other TWDM channel terminals themselves are abnormal, and when an abnormality is detected, processing the ONU sending abnormal uplink data.

In this embodiment, the uplink data abnormality information includes at least one of: an ONU identification of the ONU sending the abnormal uplink data, an indication identification for indicating the abnormal uplink data, and an electrical signal corresponding to the abnormal uplink data.

In this embodiment, the first TWDM channel terminal sending the uplink data abnormality information to the other TWDM channel terminals in the TWDM PON includes: the first TWDM channel terminal judging whether the ONU identification of the ONU sending the abnormal uplink data is detected; when the judgment result is yes, the first TWDM channel terminal sending the ONU identification to the other TWDM channel terminals in the TWDM PON; and/or, when the judgment result is no, the first TWDM channel terminal sending the indication identification for indicating the abnormal uplink data/the electrical signal corresponding to the abnormal uplink data to the other TWDM channel terminals.

In this embodiment, after the first TWDM channel terminal sends the uplink data abnormality information to the other TWDM channel terminals in the TWDM PON, further including: in the case that the first TWDM channel terminal sends the ONU identification to the other TWDM channel terminals, receiving feedback information sent by a second TWDM channel terminal that the processing on an abnormal ONU corresponding to the ONU identification has been completed, herein, the second TWDM channel terminal has a function of identifying that the ONU is an ONU managed by the second TWDM channel terminal itself according to the ONU identification; and/or, in the case that the first TWDM channel terminal sends the indication identification for indicating the abnormal uplink data/the electrical signal corresponding to the abnormal uplink data to the other TWDM channel terminals, receiving feedback information sent by a third TWDM channel terminal that the processing on the ONU that has a signal loss or is wavelength tuned incorrectly has been completed, herein, the third TWDM channel terminal has the function of identifying that an ONU managed by the third TWDM channel terminal itself has a signal loss or is in a wavelength tuning error state.

In an embodiment, before the first TWDM channel terminal sends the uplink data abnormality information to the other TWDM channel terminals in the TWDM PON, wavelength tuning information sent by a fourth TWDM channel terminal for performing wavelength tuning on the ONU that belongs to the fourth TWDM channel terminal is received, herein, the wavelength tuning information carries an ONU identification of the ONU that is wavelength tuned; the first TWDM channel terminal judges whether the ONU of the fourth TWDM channel terminal that is wavelength tuned sends abnormal uplink data on a channel corresponding to the first TWDM channel terminal according to the wavelength tuning information; when the judgment result is yes, the first TWDM channel terminal sends the uplink data abnormality information to the fourth TWDM channel terminal.

Also provided is a method for processing abnormal uplink data, including: a second TWDM channel terminal in a TWDM PON receiving uplink data abnormality information sent by the first TWDM channel terminal, herein, the uplink data abnormality information is used for indicating the second TWDM channel terminal to detect whether uplink data sent by an ONU managed by the second TWDM channel terminal itself are abnormal, and when an abnormality is detected, processing the ONU that sends abnormal uplink data; the second TWDM channel terminal detecting whether the uplink data sent by the ONU managed by the second TWDM channel terminal itself are abnormal according to the uplink data abnormality information; when an abnormality is detected, the second TWDM channel terminal processing the ONU that sends the abnormal uplink data and transmits feedback information to the first TWDM channel terminal, that indicates processing of the sends the abnormal uplink data has been completed.

In this embodiment, the second TWDM channel terminal detecting whether the uplink data sent by the ONU managed by the second TWDM channel terminal itself are abnormal according to the uplink data abnormality information includes at least one of: in the case that the uplink data abnormality information is an ONU identification of the ONU sending the abnormal uplink data, the second TWDM channel terminal detecting whether the ONU sending the abnormal uplink data is an ONU managed by the second TWDM channel terminal itself according to the ONU identification; in the case that the uplink data abnormality information is an indication identification for indicating abnormal uplink data or an electrical signal corresponding to the abnormal uplink data, the second TWDM channel terminal detecting whether the ONU sending the abnormal uplink data is an ONU managed by the second TWDM channel terminal itself that has a signal loss/is wavelength tuned incorrectly.

In an embodiment, in the case that the second TWDM channel terminal detects that the ONU sending the abnormal uplink data is the ONU managed by the second TWDM channel terminal itself according to the ONU identification, the second TWDM channel terminal processing the ONU that sends the abnormal uplink data includes at least one of: stopping allocating an uplink bandwidth to the ONU corresponding to the ONU identification, sending an uplink wavelength tuning command to the ONU corresponding to the ONU identification, sending an uplink wavelength calibration command to the ONU corresponding to the ONU identification, sending a deactivation command to the ONU corresponding to the ONU identification, sending a disabling command to the ONU corresponding to the ONU identification; and/or, in the case that the second TWDM channel terminal detects that the ONU sending the abnormal uplink data is the ONU managed by the second TWDM channel terminal itself that has the signal loss/is wavelength tuned incorrectly, the second TWDM channel terminal processing the ONU that sends the abnormal uplink data includes at least one of: stopping allocating an uplink bandwidth to the ONU that has signal loss/is wavelength tuned incorrectly, sending an uplink wavelength tuning command to the ONU that has the signal loss/is wavelength tuned incorrectly, sending an uplink wavelength calibration command to the ONU that has the signal loss/is wavelength tuned incorrectly, sending a deactivation command to the ONU that has the signal loss/is wavelength tuned incorrectly, and sending a disabling command to the ONU that has the signal loss/is wavelength tuned incorrectly.

Also provided is an apparatus for processing abnormal uplink data located in a first TWDM channel terminal in a TWDM PON, including: a first detecting module, arranged to detect abnormal uplink data; a first sending module, arranged to send uplink data abnormality information to other TWDM channel terminals in the TWDM PON, herein, the uplink data abnormality information is used for the other TWDM channel terminals detecting whether uplink data sent by an ONU managed by the other TWDM channel terminals themselves are abnormal, and process the ONU sending abnormal uplink data when an abnormality is detected.

In this embodiment, the first sending module includes: a judging unit, arranged to judge whether an ONU identification of the ONU sending the abnormal uplink data is detected; a first sending unit, arranged to: when the judgment result is yes, send the ONU identification to the other TWDM channel terminals in the TWDM PON; and/or, a second sending unit, arranged to: when the judgment result is no, send an indication identification for indicating the abnormal uplink data and/or an electrical signal corresponding to the abnormal uplink data to the other TWDM channel terminals.

In this embodiment, the apparatus further includes: a first receiving module, arranged to: in the case that the first TWDM channel terminal sends the ONU identification to the other TWDM channel terminals, receive feedback information sent by a second TWDM channel terminal that the processing on the abnormal ONU corresponding to the ONU identification has been completed, herein, the second TWDM channel terminal has a function of identifying that the ONU is an ONU managed by the second TWDM channel terminal itself according to the ONU identification; and/or, a second receiving module, arranged to: in the case that the first TWDM channel terminal sends the indication identification for indicating the abnormal uplink data/the electrical signal corresponding to the abnormal uplink data to the other TWDM channel terminals, receive feedback information sent by a third TWDM channel terminal that the processing on the ONU has a signal loss or is wavelength tuned incorrectly has been completed, herein, the third TWDM channel terminal has the function of identifying that an ONU managed by the third TWDM channel terminal itself has a signal loss or is in a wavelength tuning error state.

In an embodiment, the apparatus further includes: a third receiving module, arranged to: before sending the uplink data abnormality information to the other TWDM channel terminals in the TWDM PON, receive wavelength tuning information sent by a fourth TWDM channel terminal for performing wavelength tuning on an ONU that belongs to the fourth TWDM channel terminal, herein, the wavelength tuning information carries the ONU identification of the ONU that is wavelength tuned; a judging module, arranged to judge whether the ONU of the fourth TWDM channel terminal that is wavelength tuned sends the abnormal uplink data on a channel corresponding to the first TWDM channel terminal according to the wavelength tuning information; the first sending module, further arranged to: when the judgment result of the judging module is yes, send the uplink data abnormality information to the fourth TWDM channel terminal.

Also provided is an apparatus for processing abnormal uplink data located in a second TWDM channel terminal in a TWDM PON, including: a fourth receiving module, arranged to receive uplink data abnormality information sent by a first TWDM channel terminal, herein, the uplink data abnormality information is used for indicating the second TWDM channel terminal to detect whether uplink data sent by an ONU managed by the second TWDM channel terminal itself are abnormal, and when an abnormality is detected, process the ONU that sends abnormal uplink data; a second detecting module, arranged to detect whether the uplink data sent by the ONU managed by the second TWDM channel terminal itself are abnormal according to the uplink data abnormality information; a processing module, arranged to: in the case that the detecting module detects an abnormality, process the ONU that sends the abnormal uplink data, and a transmitting module arranged to transmit feedback information to the first TWDM channel terminal, that indicates processing of the sends the abnormal uplink data has been completed.

In this embodiment, the second detecting module includes at least one of: a first detecting module, arranged to: in the case that the uplink data abnormality information is an ONU identification of the ONU sending the abnormal uplink data, detect whether the ONU sending the abnormal uplink data is an ONU managed by itself according to the ONU identification; a second detecting module, arranged to: in the case that the uplink data abnormality information is an indication identification for indicating the abnormal uplink data or an electrical signal corresponding to the abnormal uplink data, detect whether the ONU sending the abnormal uplink data is an ONU managed by itself that has a signal loss/is wavelength tuned incorrectly.

In an embodiment, the processing module includes: a first processing unit, arranged to: in the case that the second TWDM channel terminal detects that the ONU sending the abnormal uplink data is the ONU managed by the second TWDM channel terminal itself according to the ONU identification, the second TWDM channel terminal processing the ONU that sends the abnormal uplink data includes at least one of: stopping allocating an uplink bandwidth to the ONU corresponding to the ONU identification, sending an uplink wavelength tuning command to the ONU corresponding to the ONU identification, sending an uplink wavelength calibration command to the ONU corresponding to the ONU identification, sending a deactivation command to the ONU corresponding to the ONU identification, sending a disabling command to the ONU corresponding to the ONU identification; and/or, a second processing unit, arranged to: in the case that the second TWDM channel terminal detects that the ONU sending the abnormal uplink data is the ONU managed by the second TWDM channel terminal itself that has a signal loss/is wavelength tuned incorrectly, the second TWDM channel terminal processing the ONU sending the abnormal uplink data includes at least one of: stopping allocating an uplink bandwidth to the ONU that has the signal loss/is wavelength tuned incorrectly, sending an uplink wavelength tuning command to the ONU that has the signal loss/is wavelength tuned incorrectly, sending an uplink wavelength calibration command to the ONU that has the signal loss/is wavelength tuned incorrectly, sending a deactivation command to the ONU that has the signal loss/is wavelength tuned incorrectly, and sending a disabling command to the ONU that has the signal loss/is wavelength tuned incorrectly.

According to the present invention, the first TWDM channel terminal in the TWDM PON is used for detecting abnormal uplink data; the first TWDM channel terminal sends uplink data abnormality information to other TWDM channel terminals in the TWDM PON, herein, the uplink data abnormality information is used for the other TWDM channel terminals detecting whether the uplink data sent by an ONU managed by the other TWDM channel terminals are abnormal, and when an abnormality is detected, processes the ONU sending the abnormal uplink data, thus solving the problem in the related art that the ONU sends data on a wrong uplink wavelength channel to cause uplink data interference on the uplink wavelength channel, thereby achieving the effect of quickly locating the ONU using the wrong uplink wavelength for communication, so as to rapidly reduce the uplink channel interference, and improving the quality of service of the network.

### Brief Description of Drawings

The accompanying drawings described herein are intended to provide further understanding on the present invention and constitute a part of the present application. Illustrative examples of the present invention and their description are used for explaining the present invention and do not constitute undue limitations to the present invention. In the accompanying drawings:
FIG. 1 is a topological structure diagram of a PON system in the related art;
FIG. 2 is a topological structure diagram of a TWDM PON system in the related art;
FIG. 3 is a flow chart of a first method for processing abnormal uplink data in accordance with an example of the present invention;
FIG. 4 is a flowchart of a second method for processing abnormal uplink data in accordance with an example of the present invention;
FIG. 5 is a block diagram of the structure of a first abnormal uplink data processing apparatus in accordance with an example of the present invention;
FIG. 6 is a block diagram of the structure of a first sending module 54 in the first abnormal uplink data processing apparatus in accordance with an example of the present invention,
FIG. 7 is a first block diagram of a structure of the first abnormal uplink data processing apparatus in accordance with an example of the present invention;
FIG. 8 is a second block diagram of the structure of the first abnormal uplink data processing apparatus in accordance with an example of the present invention;
FIG. 9 is a block diagram of the structure of a second abnormal uplink data processing apparatus in accordance with an example of the present invention;
FIG. 10 is a block diagram of a structure of a second detecting module 94 in the second abnormal uplink data processing apparatus in accordance with an example of the present invention;
FIG. 11 is a block diagram of a structure of a processing module 96 in the second abnormal uplink data processing apparatus in accordance with an example of the present invention.

### Detailed Embodiments of the Invention

For the remaining of this description, embodiment, merely represents an example.

Hereinafter, in conjunction with the accompanying drawings and embodiments, the present invention will be described in detail. It should be noted that, in the case of no conflict, embodiments in the present invention and features in the embodiments may be combined with each other.

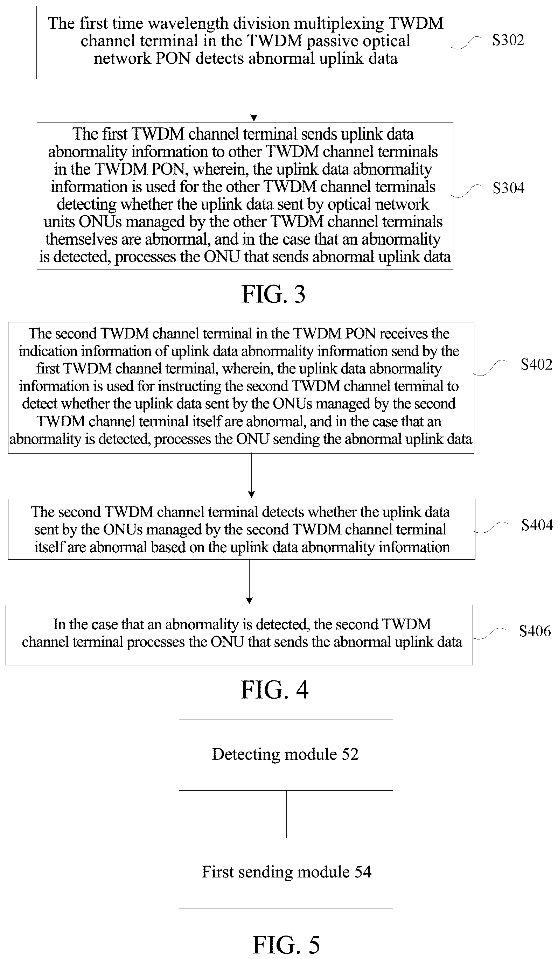

In this embodiment is provided a method for processing abnormal uplink data, FIG. 3 is a flow chart of the first method for processing abnormal uplink data in accordance with an embodiment of the present invention, and as shown in FIG. 3, the process includes the following steps:
in step S302, a first TWDM channel terminal in a TWDM PON detects abnormal uplink data;
in step S304, the first TWDM channel terminal sends uplink data abnormality information to other TWDM channel terminals in the TWDM PON, herein the uplink data abnormality information is used for the other TWDM channel terminals detecting whether the uplink data sent by an ONU managed by the other TWDM channel terminals themselves are abnormal, and when an abnormality is detected, processes the ONU that sends the abnormal uplink data.

From the abovementioned step, when the abnormal uplink data is detected in a channel terminal suffering from interference (i.e., the abovementioned first TWDM channel terminal), uplink data abnormality information for processing the abnormal uplink data is send to the other TWDM channel terminals so as to quickly locate the ONU sending the abnormal uplink data, which not only solves the problem in the related art that an ONU sends data on a wrong uplink wavelength channel to cause uplink data interference on the uplink wavelength channel, but also can quickly locate the ONU using the wrong uplink wavelength for communication, thus rapidly reducing the interference on the uplink channel and improving the quality of service of the network.

Herein, the uplink data abnormality information may be adopted in various ways, for example, at least one of the following ways: an ONU identification of an ONU that sends abnormal uplink data, an indication identification for indicating the abnormal uplink data, and an electrical signal corresponding to the abnormal uplink data.

When the first TWDM channel terminal sends the uplink data abnormality information to other TWDM channel terminals other than the first TWDM channel terminal in the TWDM PON, different treatments can be applied based on whether the ONU identification of the ONU sending the abnormal uplink data can be identified: first it is to judge whether the ONU identification of the ONU sending the abnormal uplink data is detected, and when the judgment result is yes, the first TWDM channel terminal may send the ONU identification to the other TWDM channel terminals other than the first TWDM channel terminal in the TWDM PON, and through the ONU identification, the other terminals receiving the ONU identification can quickly identify whether the ONU is an ONU managed by the respective other terminals themselves; when the judgment result is no, the first TWDM channel terminal may send an indication identification for indicating the abnormal uplink data/an electric signal corresponding to the abnormal uplink data to the other TWDM channel terminals. In other words, when the channel terminal suffering from interference cannot identify the ONU identification information of the abnormal ONU, the optical signal of the uplink data sent by the abnormal ONU may be sent to other channel terminals, or after the optical signal of the uplink data sent by the abnormal ONU is photo-electrically converted, the electrical signal is directly sent to all the other channel terminals without any treatment. The channel terminal to which the abnormal ONU belongs can identify the ONU identification information of the ONU, thus the identity of the abnormal ONU can be directly located so that the OLT can directly process the abnormal ONU.

After the first TWDM channel terminal sends the uplink data abnormality information to other TWDM channel terminals other than the first TWDM channel terminal in the TWDM PON, the first TWDM channel terminal may receive different feedback information from the different other TWDM channel terminals when the types of the other TWDM channel terminals are different. For example, in the case that the first TWDM channel terminal sends the ONU identification to the other TWDM channel terminals, and when the other TWDM channel terminals are a second TWDM channel terminal that has a function of identifying that the ONU is an ONU managed by itself according to the ONU identification, the first TWDM channel terminal may receive feedback information sent by the second TWDM channel terminal that the processing on the abnormal ONU corresponding to the ONU identification has been completed; and for another example, in the case that the first TWDM channel terminal sends an indication identification for indicating the abnormal uplink data/an electric signal corresponding to the abnormal uplink data to other TWDM channel terminals, and when the other TWDM channel terminals are a third TWDM channel terminal that has the function of identifying that an ONU managed by itself has a signal loss or is in a wavelength tuning error state, the first TWDM channel terminal may receive feedback information sent by the third TWDM channel terminal that the processing on the ONU that has the signal loss or is wavelength tuned incorrectly has been completed.

In an exemplary embodiment, the first TWDM channel terminal, before sending the uplink data abnormality information to other TWDM channel terminals other than the first TWDM channel terminal in the TWDM PON, may receive information related to the state adjustment sent by the other TWDM channel terminals, and then can quickly locate the ONU sending the abnormal uplink data according to the received relevant information. For example, wavelength tuning information sent by a fourth TWDM channel terminal for performing wavelength tuning on an ONU that belongs to the fourth TWDM channel terminal is received, herein the wavelength tuning information carries the ONU identification of the ONU that is wavelength tuned; the first TWDM channel terminal judges whether an ONU of the fourth TWDM channel terminal that is wavelength tuned sends the abnormal uplink data on a channel corresponding to the first TWDM channel terminal according to the ONU identification in the wavelength tuning information; when the judgment result is yes, the first TWDM channel terminal sends the uplink data abnormality information to the fourth TWDM channel terminal. Through such processing, the TWDM channel terminal with occurrence of abnormal uplink data can be quickly located, and the uplink data interference can be solved more quickly.

In addition, if the fourth TWDM channel terminal does not send the ONU identification of the ONU that is wavelength tuned to the first TWDM channel terminal, or the first TWDM channel terminal cannot identify the ONU identification of the abnormal ONU, the first TWDM channel terminal cannot determine whether the abnormal ONU belongs to the fourth TWDM channel terminal, and at this time, it may be doubted that the wavelength-tuned ONU that belongs to the fourth TWDM channel is the abnormal ONU, of course, this can only be speculation. Such speculation may help the first TWDM channel terminal orient information sent to the fourth TWDM channel terminal, and the information may be notifying the fourth TWDM channel terminal of detecting whether the wavelength-tuned ONU completes correct wavelength tuning.

In this embodiment is further provided a method for processing abnormal uplink data, FIG. 4 is a flow chart of the second method for processing abnormal uplink data in accordance with an embodiment of the present invention, and as shown in FIG. 4, the process includes the following steps:
in step S402, the second TWDM channel terminal in the TWDM PON receives uplink data abnormality information sent by the first TWDM channel terminal, herein, the uplink data abnormality information is used for indicating the second TWDM channel terminal to detect whether uplink data sent by the ONU managed by the second TWDM channel terminal itself are abnormal, and, when an abnormality is detected, processes the ONU sending abnormal uplink data;
in step S404, the second TWDM channel terminal detects whether the uplink data sent by the ONU managed by the second TWDM channel terminal itself are abnormal based on the uplink data abnormality information;
in step S406, when an abnormality is detected, the second TWDM channel terminal processes the ONU that sends the abnormal uplink data.

Through the above steps, when the uplink data abnormality information sent by the first TWDM channel terminal that detects the abnormal uplink data is received, a corresponding detection is executed according to the uplink data abnormality information, and the abnormal uplink data sent by the ONU are processed, so as to quickly locate the ONU sending the abnormal uplink data, which not only solves the problem in the related art that an ONU sends data on a wrong uplink wavelength channel to cause uplink data interference on the uplink wavelength channel, but also can rapidly locate the ONU using the wrong uplink wavelength for communication, thus quickly reducing the interference on the uplink channel and improving the quality of service of the network.

Depending on different contents of the uplink data abnormality information, different corresponding treatments can also be used to detect whether the uplink data sent by the ONU managed by itself are abnormal according to the uplink data abnormality information. In the following, it will be described through examples:
For example, in the case that the uplink data abnormality information is the ONU identification of the ONU that sends the abnormal uplink data, the second TWDM channel terminal detects whether the ONU sending the abnormal uplink data is an ONU managed by the second TWDM channel terminal itself according to the ONU identification; for another example, in the case that the uplink data abnormality information is an indication identification for indicating the abnormal uplink data or an electrical signal corresponding to the abnormal uplink data, the second TWDM channel terminal detects whether the ONU sending the abnormal uplink data is an ONU managed by the second TWDM channel terminal itself that has a signal loss/is wavelength tuned.

When the content of the abovementioned uplink data abnormality information is different, as well as the corresponding detection and processing method is different, the processing on the ONU that sends the abnormal uplink data may also be different:
For example, in the case that the second TWDM channel terminal detects that the ONU sending the abnormal uplink data is an ONU managed by the second TWDM channel terminal itself according to the ONU identification, the second TWDM channel terminal processing the ONU that sends the abnormal uplink data includes at least one of: stopping allocating an uplink bandwidth to the ONU corresponding to the ONU identification, sending an uplink wavelength tuning command to the ONU corresponding to the ONU identification, sending an uplink wavelength calibration command to the ONU corresponding to the ONU identification, sending a deactivation command to the ONU corresponding to the ONU identification, sending a disabling command to the ONU corresponding to the ONU identification;
for another example, in the case that the second TWDM channel terminal detects that the ONU sending the abnormal uplink data is an ONU managed by the second TWDM channel terminal itself that has a signal loss/is wavelength tuned, the second TWDM channel terminal processing the ONU that sends the abnormal uplink data includes at least one of: stopping allocating an uplink bandwidth to the ONU that has a signal loss/is wavelength tuned, sending an uplink wavelength tuning command to the ONU that has a signal loss/is wavelength tuned, sending an uplink wavelength calibration command to the ONU that has a signal loss/is wavelength tuned, sending a deactivation command to the ONU that has a signal loss/is wavelength tuned, and sending a disabling command to the ONU that has a signal loss/is wavelength tuned.

In this embodiment is further provided an apparatus for processing abnormal uplink data for implementing the abovementioned embodiments and embodiments, and what have been described will not be repeated. As used below, the term "module" may be a combination of software and/or hardware implementing predetermined functions. Although the apparatus described in the following embodiments are implemented by software, implementations of hardware or a combination of software and hardware may also be contemplated.

FIG. 5 is a block diagram of the structure of the first apparatus for processing abnormal uplink data in accordance with an embodiment of the present invention, and as shown in FIG. 5, the apparatus is located in the first TWDM channel terminal in the TWDM PON, including: a detecting module 52 and a first sending module 54, and the apparatus will be described below.

The detecting module 52 is arranged to detect the abnormal uplink data; the first sending module 54 is connected to the above detecting module 52 and is arranged to send uplink data abnormality information to other TWDM channel terminals in the TWDM PON, herein, the uplink data abnormality information is used for the other TWDM channel terminals detecting whether the uplink data sent by the ONU managed by the other TWDM channel terminals themselves are abnormal, and when an abnormality is detected, process the ONU sending the abnormal uplink data.

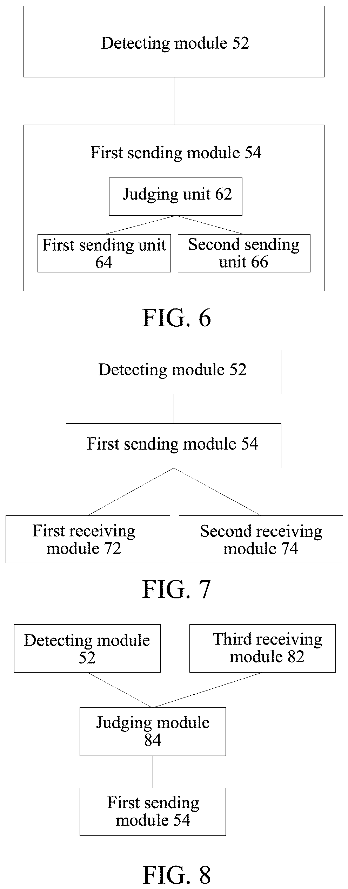

FIG. 6 is the block diagram of the structure of the first sending module 54 in the first apparatus for processing abnormal uplink data in accordance with the embodiment of the present invention, and as shown in FIG. 6, the first sending module 54 includes: a judging unit 62, a first sending unit 64 and/or a second sending unit 66, and in the following, the first sending module 54 will be described.

The judging unit 62 is arranged to judge whether the ONU identification of the ONU sending the abnormal uplink data is detected; the first sending unit 64 is connected to the above judging unit 62 and is arranged to: when the judgment result of the judging unit 62 is yes, send an ONU identification to other TWDM channel terminals other than the first TWDM channel terminal in the TWDM PON; the second sending unit 66 is connected to the above judging unit 62 and is arranged to: when the judgment result of the judging unit 62 is no, send an indication identification for indicating the abnormal uplink data/an electrical signal corresponding to the abnormal uplink data to the other TWDM channel terminals.

FIG. 7 is the first block diagram of the structure of the first apparatus for processing abnormal uplink data in accordance with the embodiment of the present invention, and as shown in FIG. 7, besides all the structures shown in FIG. 5, the apparatus further includes a first receiving module 72 and/or a second receiving module 74, and in the following, the apparatus will be described.

The first receiving module 72 is arranged to: in the case that the first TWDM channel terminal sends the ONU identification to the other TWDM channel terminals, receive feedback information sent by the second TWDM channel terminal that the processing on the abnormal ONU corresponding to the ONU identification has been completed, herein, the second TWDM channel terminal has a function of identifying that the ONU is an ONU managed by the second TWDM channel terminal itself according to the ONU identification; the second receiving module 74 is arranged to: in the case that the first TWDM channel terminal sends the indication identification for indicating the abnormal uplink data/the electrical signal corresponding to the abnormal uplink data to the other TWDM channel terminals, receive feedback information sent by a third TWDM channel terminal that the processing on the ONU that has a signal loss or is wavelength tuned incorrectly has been completed, herein, the third TWDM channel terminal has the function of identifying that the ONU managed by the third TWDM channel terminal itself has the signal loss or is in the wavelength tuning error state.

FIG. 8 is the second block diagram of the structure of the first apparatus for processing abnormal uplink data in accordance with the embodiment of the present invention, and as shown in FIG. 8, besides all the structures shown in FIG. 5, the apparatus further includes: a third receiving module 82 and a judging module 84, and the structure will be described in the following.

The third receiving module 82 is arranged to: before the uplink data abnormality information is sent to other TWDM channel terminals in the TWDM PON, receive wavelength tuning information sent by the fourth TWDM channel terminal for performing wavelength tuning on the ONU that belongs to the fourth TWDM channel terminal, herein, the wavelength tuning information carries the ONU identification of the ONU that is wavelength tuned; the judging module 84 is connected to the above detecting module 52, the third receiving module 82 and the first sending module 54, and is arranged to judge whether the ONU of the fourth TWDM channel terminal that is wavelength tuned sends the abnormal uplink data on a channel corresponding to the first TWDM channel terminal according to the wavelength tuning information; the first sending module 54 is further arranged to: when the judgment result of the above judging module 84 is yes, send the uplink data abnormality information to the fourth TWDM channel terminal.

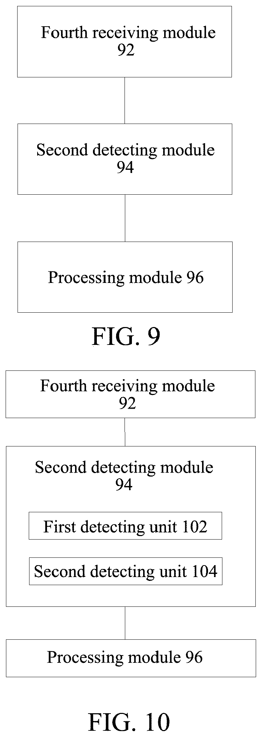

FIG. 9 is a block diagram of the second apparatus for processing abnormal uplink data in accordance with the embodiment of the present invention, and as shown in FIG. 9, the apparatus is located in the second TWDM channel terminal in the TWDM PON, including: a fourth receiving module 92, a second detecting module 94 and a processing module 96, and in the following, the apparatus will be described.

The fourth receiving module 92 is arranged to receive the uplink data abnormality information sent by the first TWDM channel terminal, herein, the uplink data abnormality information is used for indicating the second TWDM channel terminal to detect whether the uplink data sent by the ONU managed by the second TWDM channel terminal itself are abnormal, and when an abnormality is detected, process the ONU that sends the abnormal uplink data; the second detecting module 94 is connected to the fourth receiving module 92 and is arranged to: detect whether the uplink data sent by the ONU managed by itself are abnormal according to the uplink data abnormality information; the processing module 96 is connected to the second detecting module 94 and is arranged to: in the case that the detecting module detects an abnormality, process the ONU that sends the abnormal uplink data.

FIG. 10 is a block diagram of the structure of the second detecting module 94 in the second apparatus for processing abnormal uplink data in accordance with the embodiment of the present invention, and as shown in FIG. 10, the second detecting module 94 includes at least one of: a first detecting unit 102 and a second detecting unit 104, and in the following, the second detecting module 94 will be described.

The first detecting unit 102 is arranged to: in the case that the uplink data abnormality information is the ONU identification of the ONU sending the abnormal uplink data, detect whether the ONU sending the abnormal uplink data is an ONU managed by itself according to the ONU identification; the second detecting unit 104 is arranged to: in the case that the uplink data abnormality information is an indication identification for indicating the abnormal uplink data or an electrical signal corresponding to the abnormal uplink data, detect whether the ONU sending the abnormal uplink data is the ONU managed by itself that has a signal loss or is wavelength tuned incorrectly.

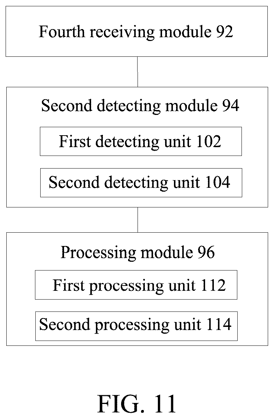

FIG. 11 is a block diagram of the structure of the processing module 96 in the second apparatus for processing abnormal uplink data in accordance with the embodiment of the present invention, and as shown in FIG. 11, the processing module 96 includes: a first processing unit 112 and/or a second processing unit 114, and in the following, the processing module 96 will be described.

The first processing unit 112 is arranged to: in the case that the second TWDM channel terminal detects that the ONU sending the abnormal uplink data is an ONU managed by the second TWDM channel terminal itself according to the ONU identification, the second TWDM channel terminal processing the ONU sending the abnormal uplink data includes at least one of: stopping allocating an uplink bandwidth to the ONU corresponding to the ONU identification, sending an uplink wavelength tuning command to the ONU corresponding to the ONU identification, sending an uplink wavelength calibration command to the ONU corresponding to the ONU identification, sending a deactivation command to the ONU corresponding to the ONU identification, and sending a disabling command to the ONU corresponding to the ONU identification; the second processing unit 114 is arranged to: in the case that the second TWDM channel terminal detects that the ONU sending the abnormal uplink data is the ONU managed by the second TWDM channel terminal itself that has the signal loss/is wavelength tuned incorrectly, the second TWDM channel terminal processing the ONU that sends the abnormal uplink data includes at least one of: stopping allocating an uplink bandwidth to the ONU that has the signal loss/is wavelength tuned incorrectly, sending an uplink wavelength tuning command to the ONU that has the signal loss/is wavelength tuned incorrectly, sending an uplink wavelength calibration command to the ONU that has the signal loss/is wavelength tuned incorrectly, sending a deactivation command to the ONU that has the signal loss/is wavelength tuned incorrectly, and sending a disabling command to the ONU that has the signal loss/is wavelength tuned incorrectly.

In the related art, there is no effective communication method between the TWDMs to solve the problem in the TWDM PON system that the communication between different TWDM channels can help the OLT quickly locate the abnormal ONU and reduce such uplink data interference. In this embodiment is provided a communication method between different TWDM channels in the passive optical network, to effectively solve the problem that an ONU sends data on a wrong uplink wavelength channel to cause uplink data interference on the uplink wavelength channel. The method will be described below.

The first TWDM channel terminal in the TWDM PON detects abnormal uplink data and the first TWDM channel terminal detects that an ONU not belonging to the first TWDM channel sends uplink data on the first TWDM channel in accordance with the ONU identification (corresponding to the ONU sending the abnormal uplink data), then the first TWDM channel terminal sends at least one of the following contents to all the other TWDM channel terminals or a certain TWDM channel terminal in the TWDM PON system: the ONU identification, a first TWDM channel identification, a downlink wavelength identification of the first TWDM channel, and an uplink wavelength identification of the first TWDM channel, the ONU corresponding to the ONU identification sending the uplink data on the first TWDM channel, and the time when the ONU corresponding to the ONU identification sends the uplink data on the TWDM channel, notifying the other TWDM channel terminals of commanding the above ONU to perform a wavelength calibration;
if the first TWDM channel terminal cannot obtain the ONU identification of the ONU that causes abnormal uplink data on the first TWDM channel, the first TWDM channel terminal sends at least one of the following contents to all the other TWDM channel terminals or a certain TWDM channel terminal in the TWDM PON system: the first TWDM channel identification, the downlink wavelength identification of the first TWDM channel, the uplink wavelength identification of the first TWDM channel, the time when the ONU sends the uplink data on the first TWDM channel, and the abnormal uplink data on the first TWDM channel, notifying the other TWDM channel terminals of processing the ONU that has a signal loss and/or is wavelength tuned, and notifying the other TWDM channel terminals of commanding the ONU that is in a signal loss state and/or is wavelength tuned to perform the wavelength calibration.

The second TWDM channel terminal receiving the information sent by the first TWDM channel terminal, if identifying that the ONU identification is an ONU identification managed by its own TWDM channel, stops allocating an uplink bandwidth to the ONU corresponding to the ONU identification, or sends an uplink wavelength tuning command or an uplink wavelength calibration command to the ONU corresponding to the ONU identification, or sends a deactivation command to the ONU corresponding to the ONU identification, or sends a disabling command to the ONU corresponding to the ONU identification; after completing the abovementioned content, the second TWDM channel terminal sends at least one of the following contents to the first TWDM channel terminal: the processing on the abnormal ONU having been completed; and notifying the first TWDM channel terminal of restoring uplink data transmission.

Herein, the first TWDM channel terminal restores the uplink data transmission on the first TWDM channel when no abnormal uplink data can be detected or after a message from the second TWDM channel terminal is received.

The third TWDM channel terminal receiving the information sent by the first TWDM channel terminal, if identifying that the ONU managed by the third TWDM channel terminal itself has an ONU signal loss or is in a wavelength tuning state, stops allocating an uplink bandwidth to the ONU that has the signal loss or is wavelength tuned, or sends an uplink wavelength tuning command or an uplink wavelength calibration command to the ONU that has the signal loss or is wavelength tuned, or sends a deactivation command to the ONU that has the signal loss or is wavelength tuned, or sends a disabling command to the ONU that has the signal loss or is wavelength tuned; after completing the abovementioned content, the third TWDM channel terminal sends the following content to the first TWDM channel: the processing on the ONU that has the signal loss or is wavelength tuned having been completed.

Herein, when the first TWDM channel cannot detect abnormal uplink data, the following content is sent to the third TWDM channel: abnormal uplink data disappearance.

It should be noted that in the abovementioned "the third TWDM channel terminal receiving the information sent by the first TWDM channel terminal, if identifying that the ONU managed by the third TWDM channel terminal itself is in a wavelength tuning state", the third TWDM channel terminal includes both a TWDM channel terminal corresponding to the source TWDM channel before the ONU is wavelength tuned, and a TWM channel terminal corresponding to the target TWDM channel after the ONU is wavelength tuned.

At the same time of sending a wavelength tuning command to the ONU, the fourth TWDM channel terminal sends at least one of the following wavelength tuning related contents to all the other TWDM channel terminals in the TWDM PON: an ONU identification of the ONU that is wavelength tuned, a source TWDM channel identification, a downlink wavelength identification of the source TWDM channel, an uplink wavelength identification of the source TWDM channel, a target TWDM channel identification, a downlink wavelength identification of the target TWDM channel, and an uplink wavelength identification of the target TWDM channel.

Herein, if the first TWDM channel terminal can identify that the ONU causing abnormal uplink data belongs to the fourth TWDM channel, or the first TWDM channel terminal detects the abnormal uplink data after receiving the ONU wavelength tuning related information sent by the fourth TWDM channel terminal, the first TWDM channel terminal sends the contents sent to all the other TWDM channel terminals or a certain TWDM channel terminal in the TWDM PON system to the fourth TWDM channel terminal.

Through the above embodiments and embodiments, the TWDM channel on which uplink data interference is detected in communication with other TWDM channels can quickly locate the ONU using a wrong uplink wavelength channel for communication, and can quickly reduce interference on the uplink channel, to reduce the system recovery time and improve the quality of service of the network.

Hereinafter, the embodiments will be described.

### The First Embodiment

There is a plurality of TWDM channels in the TWDM PON system, and each TWDM channel corresponds to a downlink wavelength channel and one or more uplink wavelength channels. Different TWDM channels correspond to different downlink wavelength channels and different uplink wavelength channels. The OLT commands each ONU connected to the PON system to operate on a certain TWDM channel, the ONU uses the downlink wavelength channel corresponding to the above TWDM channel to receive the downlink data and uses the uplink wavelength channel corresponding to the above TWDM channel to send the uplink data. When the uplink wavelength of the ONU drifts spontaneously or an uplink wavelength tuning error occurs, the downlink wavelength remains on the correct downlink wavelength channel, and the uplink wavelength drifts out of the current operating TWDM channel, the ONU can receive uplink bandwidth allocation and send data at the wrong uplink wavelength. For example, if the uplink wavelength of the ONU is incorrectly tuned to another operating TWDM channel (e.g., referred to as a first TWDM channel), or if the uplink wavelength of the ONU drifts to the first TWDM channel, the ONU receives the uplink bandwidth allocation on the correct TWDM channel (e.g., referred to as a second TWDM channel, when corresponding to the case of the wrong wavelength tuning, the second TWDM channel includes both a source TWDM channel before the ONU is wavelength tuned and a target wavelength channel after the ONU is wavelength tuned), and sends the uplink data on the wrong first TWDM channel, which interferes with the uplink data on the first TWDM channel, resulting in that the OLT detects abnormal uplink data on the first TWDM channel. The TWDM channel terminals of the OLT use the following steps to restore the uplink communication on the first TWDM channel:
In step S1, the first TWDM channel terminal corresponding to the first TWDM channel in the TWDM PON detects abnormal uplink data, and the first TWDM channel terminal in the TWDM PON stops allocating an uplink bandwidth to the ONU operating on the first TWDM channel. If the first TWDM channel terminal is able to continuously receive uplink data, the first TWDM channel detects the ONU identification sending the uplink data, and if the ONU identification can be parsed and obtained and the ONU identification does not belong to the first TWDM channel, the first TWDM channel terminal sends at least one of the following contents to all the other TWDM channels in the TWDM PON system: the ONU identification, the first TWDM channel identification, the downlink wavelength identification of the first TWDM channel, the uplink wavelength identification of the first TWDM channel, the ONU corresponding to the ONU identification sending the uplink data on the first TWDM channel, the time when the ONU corresponding to the ONU identification sends the uplink data on the TWDM channel, notifying the other TWDM channel terminals of commanding the ONU to perform a wavelength calibration.

In step S2, after the second TWDM channel terminal receives the information sent by the first TWDM channel terminal, if identifying that the ONU identification is an ONU identification managed by its own TWDM channel, the second TWDM channel terminal stops allocating an uplink bandwidth to the ONU corresponding to the ONU identification, or sends an uplink wavelength tuning command or an uplink wavelength calibration command to the ONU corresponding to the ONU identification, or sends a deactivation command to the ONU corresponding to the ONU identification, or sends a disabling command to the ONU corresponding to the ONU identification; after completing the above content, the second TWDM channel terminal sends at least one of the following contents to the above first TWDM channel terminal: the processing on the abnormal ONU having been completed; notifying the first TWDM channel terminal of restoring the uplink data transmission.

In step S3, after the first TWDM channel terminal cannot detect the abnormal uplink data or receives a message from the above second TWDM channel terminal, the first TWDM channel terminal allocates an uplink bandwidth to the ONU operating on the first TWDM channel to restore the uplink data transmission on the first TWDM channel, and sends the following content to the second TWDM channel: abnormal uplink data appearance.

### The Second Embodiment

There is a plurality of TWDM channels in the TWDM PON system, and each TWDM channel corresponds to a downlink wavelength channel and one or more uplink wavelength channels. Different TWDM channels correspond to different downlink wavelength channels and different uplink wavelength channels. The OLT commands each ONU connected to the PON system to operate on a certain TWDM channel, and the ONU uses the downlink wavelength channel corresponding to the above TWDM channel to receive the downlink data and uses the uplink wavelength channel corresponding to the above TWDM channel to send the uplink data. When the uplink wavelength of the ONU drifts spontaneously or an uplink wavelength tuning error occurs, the downlink wavelength remains on the correct downlink wavelength channel, and the uplink wavelength drifts out of the current operating TWDM channel, the ONU can receive uplink bandwidth allocation and sends data on the wrong uplink wavelength. For example, if the uplink wavelength of the ONU is incorrectly tuned to another operating TWDM channel (e.g., referred to as the first TWDM channel), or if the uplink wavelength of the ONU drifts to the first TWDM channel, the ONU receives the uplink bandwidth allocation on the correct TWDM channel (e.g., referred to as the second TWDM channel, when corresponding to the case of wrong wavelength tuning, the second TWDM channel includes both a source TWDM channel before the ONU is wavelength tuned and a target wavelength channel after the ONU is wavelength tuned), and sends the uplink data on the wrong first TWDM channel, which interferes with the uplink data on the first TWDM channel, resulting in that the OLT detects the abnormal uplink data on the first TWDM channel. The TWDM channel terminals of the OLT use the following steps to restore the uplink communication on the first TWDM channel:

In step S1, the first TWDM channel terminal corresponding to the first TWDM channel in the TWDM PON detects abnormal uplink data, and the first TWDM channel terminal in the TWDM PON stops allocating an uplink bandwidth to the ONU operating on the first TWDM channel. If the first TWDM channel terminal is able to continuously receive the uplink data, the first TWDM channel detects the ONU identification sending the uplink data, and if the first TWDM channel terminal cannot obtain the ONU identification of the ONU causing the abnormal uplink data on the first TWDM channel, the first TWDM channel terminal sends at least one of the following contents to all the other TWDM channels in the TWDM PON system: the first TWDM channel identification, the downlink wavelength identification of the first TWDM channel, the uplink wavelength identification of the first TWDM channel, the time when the ONU sends the uplink data on the first TWDM channel, the abnormal uplink data on the first TWDM channel, notifying the other TWDM channel terminals of processing the ONU that has a signal loss or is wavelength tuned, and notifying the other TWDM channel terminals of commanding the ONU that has the signal loss and/or is wavelength tuned to perform a wavelength calibration.

In step S2, after the third TWDM channel terminal receives the information sent by the first TWDM channel terminal, if identifying that the ONU managed by the third TWDM channel terminal itself has an ONU signal loss or is in a wavelength tuning state, the third TWDM channel terminal stops allocating the uplink bandwidth to the ONU that has the signal loss or is wavelength tuned, or sends an uplink wavelength tuning command or an uplink wavelength calibration command to the ONU that has the signal loss or is wavelength tuned, or sends a deactivation command to the ONU that has the signal loss or is wavelength tuned, or sends a disabling command to the ONU that has the signal loss or is wavelength tuned; after completing the above content, the third The TWDM channel terminal sends the following content to the first TWDM channel terminal: the processing on the ONU that has the signal loss or is wavelength tuned having been completed.

In step S3, after the first TWDM channel terminal cannot detect the abnormal uplink data or receive the content sent by the third TWDM channel terminal in the step S2, the first TWDM channel terminal allocates the uplink bandwidth to the ONU operating on the first TWDM channel to restore the uplink data transmission of the first TWDM channel, and sends the following content to the third TWDM channel: abnormal uplink data appearance.

In this embodiment, the third TWDM channel can identify that an ONU managed by itself has an ONU signal loss or is in a wavelength tuning state, and if the third TWDM channel identifies that the ONU managed by itself is in the wavelength tuning state, the third TWDM channel terminal includes both the TWDM channel terminal corresponding to the source TWDM channel before the ONU is wavelength tuned and the TWDM channel terminal corresponding to the target TWDM channel after the ONU is wavelength tuned.

### The Third Embodiment

In step S1, at the same time of sending a wavelength tuning command to the ONU, the fourth TWDM channel terminal in the TWDM PON sends at least one of the following wavelength tuning related contents to all the other TWDM channel terminals in the TWDM PON: an ONU identification of the ONU that is wavelength tuned, a source TWDM channel identification, a downlink wavelength identification of the source TWDM channel, an uplink wavelength identification of the source TWDM channel, a target TWDM channel identification, a downlink wavelength identification of the target TWDM channel, and an uplink wavelength identification of the target TWDM channel.

In step S2, the first TWDM channel terminal detects abnormal uplink data after receiving the ONU wavelength tuning related information sent by the fourth TWDM channel terminal in the above third embodiment, the first TWDM channel sends at least one of the following contents to the fourth TWDM channel terminal: the first TWDM channel identification, the downlink wavelength identification of the first TWDM channel, the uplink wavelength identification of the first TWDM channel, the time when the ONU sends the uplink data on the first TWDM channel, the abnormal uplink data on the first TWDM channel, notifying the fourth TWDM channel terminal of processing the ONU that is wavelength tuned, and notifying the fourth TWDM channel terminal of commanding the ONU that is wavelength tuned to perform a wavelength calibration.

In step S3, after receiving the information sent by the first TWDM channel terminal, the fourth TWDM channel terminal stops allocating an uplink bandwidth to the ONU that is wavelength tuned, or sends an uplink wavelength tuning command or an uplink wavelength calibration command to the ONU that is wavelength tuned, or sends a deactivation command to the ONU that has the signal loss or is wavelength tuned, or sends a disabling command to the ONU that has the signal loss or is wavelength tuned; after completing the above content, the fourth TWDM channel terminal sends the following content to the above first TWDM channel: the processing on the ONU that is wavelength tuned having been completed.

In step S4, after the first TWDM channel terminal cannot detect the abnormal uplink data or receives the content sent by the fourth TWDM channel terminal in step S3, the first TWDM channel terminal allocates the uplink bandwidth to the ONU operating on the first TWDM channel to restore the uplink data transmission of the first TWDM channel, and sends the following content to the third TWDM channel: abnormal uplink data appearance.

### The Fourth Embodiment

In step S1, the first TWDM channel terminal corresponding to the first TWDM channel in the TWDM PON detects abnormal uplink data, and the first TWDM channel terminal in the TWDM PON stops allocating an uplink bandwidth to the ONU operating on the first TWDM channel. If the first TWDM channel terminal is able to continuously receive uplink data, the first TWDM channel detects the ONU identification sending the uplink data, and if the ONU identification can be parsed and obtained and it is identified that the ONU identification belongs to the fourth TWDM channel, the first TWDM channel terminal sends at least one of the following contents to the fourth TWDM channel: an ONU identification, a first TWDM channel identification, a downlink wavelength identification of the first TWDM channel, an uplink wavelength identification of the first TWDM channel, the ONU corresponding to the ONU identification sending the uplink data on the first TWDM channel, and the time when the ONU corresponding to the ONU identification sends the uplink data on the first TWDM channel, notifying the fourth TWDM channel terminal of commanding the ONU to perform a wavelength calibration.

In step S2, after the fourth TWDM channel terminal receives the information sent by the first TWDM channel terminal in the above step S1, if identifying that the ONU identification is an ONU identification managed by its own TWDM channel, the fourth TWDM channel terminal stops allocating an uplink bandwidth to the ONU corresponding to the ONU identification, or sends an uplink wavelength tuning command or an uplink wavelength calibration command to the ONU corresponding to the ONU identification, or sends a deactivation command to the ONU corresponding to the ONU identification, or sends a disable command to the ONU corresponding to the ONU identification; after completing the above content, the fourth TWDM channel terminal sends at least one of the following contents to the first TWDM channel terminal: the processing on the abnormal ONU having been completed; and notifying the first TWDM channel terminal of restoring the uplink data transmission.

In step S3, after the first TWDM channel terminal cannot detect the abnormal uplink data or receive a message from the fourth TWDM channel terminal in the step S2, the first TWDM channel terminal allocates the uplink bandwidth to the ONU operating on the first TWDM channel to restore the uplink data transmission of the first TWDM channel, and sends the following content to the fourth TWDM channel: abnormal uplink data appearance.

It should be noted that the uplink wavelength and the downlink wavelength in all the abovementioned embodiments may be the same or different.

Obviously, those skilled in the art should understand that various modules or steps of the present invention described above may be implemented by general-purpose computing devices that may be centralized on a single computing device or distributed over a network consisting of a plurality of computing devices, optionally, they may be implemented with program codes executable by the computing device so that they may be stored in the storage means and executed by the computing device, and in some cases, may be implemented by the steps shown or described herein that are performed in an order different from the order herein, or making them separately into individual integrated circuit modules, or making a plurality of modules or steps thereof into a single integrated circuit module. Thus, the present invention is not limited to any particular combination of hardware and software.

The above is only embodiments of the present invention and is not intended to limit the present invention, and for those skilled in the art, the present invention may have various changes and modifications. Any modifications, equivalent substitutions, improvements and the like made within the principles of the present invention are intended to be included in the protection scope of the present invention.

### Industrial Applicability

As described above, through the above embodiments and embodiments, the problem in the related art that an ONU sends data on a wrong uplink wavelength channel to cause uplink data interference on the uplink wavelength channel is solved, thereby achieving the effect of quickly locating the ONU using the wrong uplink wavelength for communication, thus rapidly reducing the interference on the uplink channel and improving the quality of service of the network.

## Claims

1. A method for processing abnormal uplink data, comprising:
a first time wavelength division multiplexing, TWDM, channel terminal of a TWDM passive optical network, PON, detecting (S302) abnormal uplink data;
the first TWDM channel terminal sending (S304) uplink data abnormality information to other TWDM channel terminals in the TWDM PON, wherein, the uplink data abnormality information is used for the other TWDM channel terminals detecting whether uplink data sent by optical network units, ONUs, managed by the other TWDM channel terminals themselves are abnormal, and when an abnormality is detected, processing an ONU sending abnormal uplink data;
wherein, the uplink data abnormality information comprises at least one of:
an ONU identification of the ONU sending the abnormal uplink data, an indication identification for indicating the abnormal uplink data, and an electrical signal corresponding to the abnormal uplink data,
wherein, the first TWDM channel terminal sending the uplink data abnormality information to the other TWDM channel terminals in the TWDM PON comprises:
the first TWDM channel terminal judging whether the ONU identification of the ONU sending the abnormal uplink data is detected;
when a judgment result is yes, the first TWDM channel terminal sending the ONU identification to the other TWDM channel terminals in the TWDM PON; and/or, when the judgment result is no, the first TWDM channel terminal sending the indication identification for indicating the abnormal uplink data or the electrical signal corresponding to the abnormal uplink data to the other TWDM channel terminals,
after the first TWDM channel terminal sends the uplink data abnormality information to the other TWDM channel terminals in the TWDM PON, the method further comprises:
in the case that the first TWDM channel terminal sends the ONU identification to the other TWDM channel terminals, receiving feedback information sent by a second TWDM channel terminal that processing on an abnormal ONU corresponding to the ONU identification has been completed, wherein, the second TWDM channel terminal has a function of identifying that the ONU is an ONU managed by the second TWDM channel terminal itself according to the ONU identification; and/or,
in the case that the first TWDM channel terminal sends the indication identification for indicating the abnormal uplink data or the electrical signal corresponding to the abnormal uplink data to the other TWDM channel terminals, receiving feedback information sent by a third TWDM channel terminal that processing on an ONU which has a signal loss or is wavelength tuned incorrectly has been completed, wherein, the third TWDM channel terminal has a function of identifying that an ONU managed by the third TWDM channel terminal itself has a signal loss or is in a wavelength tuning error state.

2. The method of claim 1, wherein,
before the first TWDM channel terminal sends the uplink data abnormality information to the other TWDM channel terminals in the TWDM PON, wavelength tuning information, sent by a fourth TWDM channel terminal, for performing wavelength tuning on the ONU that belongs to the fourth TWDM channel terminal is received, wherein, the wavelength tuning information carries an ONU identification of the ONU that is wavelength tuned;
the first TWDM channel terminal judges whether the ONU of the fourth TWDM channel terminal that is wavelength tuned sends abnormal uplink data on a channel corresponding to the first TWDM channel terminal according to the wavelength tuning information;
when a judgment result is yes, the first TWDM channel terminal sends the uplink data abnormality information to the fourth TWDM channel terminal.

3. A method for processing abnormal uplink data, comprising:
a second time wavelength division multiplexing, TWDM, channel terminal of a TWDM passive optical network, PON, receiving (S402) uplink data abnormality information sent by a first TWDM channel terminal, wherein, the uplink data abnormality information is used for indicating the second TWDM channel terminal to detect whether uplink data sent by an optical network unit, ONU, managed by the second TWDM channel terminal itself are abnormal, and when an abnormality is detected, processing an ONU that sends abnormal uplink data;
the second TWDM channel terminal detecting (S404) whether the uplink data sent by the ONU managed by the second TWDM channel terminal itself are abnormal according to the uplink data abnormality information;
when an abnormality is detected, the second TWDM channel terminal processing (S406) the ONU that sends the abnormal uplink data,
and transmits feedback information to the first TWDM channel terminal, that indicates processing of the sent abnormal uplink data has been completed, the second TWDM channel terminal detecting whether the uplink data sent by the ONU managed by the second TWDM channel terminal itself are abnormal according to the uplink data abnormality information comprises at least one of:
in the case that the uplink data abnormality information is an ONU identification of the ONU sending the abnormal uplink data, the second TWDM channel terminal detecting whether the ONU sending the abnormal uplink data is an ONU managed by the second TWDM channel terminal itself according to the ONU identification;
in the case that the uplink data abnormality information is an indication identification for indicating abnormal uplink data or an electrical signal corresponding to the abnormal uplink data, the second TWDM channel terminal detecting whether the ONU sending the abnormal uplink data is an ONU managed by the second TWDM channel terminal itself that has a signal loss or its wavelength tuned incorrectly.

4. The method of claim 3, wherein,
in the case that the second TWDM channel terminal detects that the ONU sending the abnormal uplink data is the ONU managed by the second TWDM channel terminal itself according to the ONU identification, the second TWDM channel terminal processing the ONU that sends the abnormal uplink data comprises at least one of: stopping allocating an uplink bandwidth to the ONU corresponding to the ONU identification, sending an uplink wavelength tuning command to the ONU corresponding to the ONU identification, sending an uplink wavelength calibration command to the ONU corresponding to the ONU identification, sending a deactivation command to the ONU corresponding to the ONU identification, sending a disabling command to the ONU corresponding to the ONU identification; and/or,
in the case that the second TWDM channel terminal detects that the ONU sending the abnormal uplink data is the ONU managed by the second TWDM channel terminal itself that has the signal loss or its wavelength tuned incorrectly, the second TWDM channel terminal processing the ONU that sends the abnormal uplink data comprises at least one of: stopping allocating an uplink bandwidth to the ONU that has signal loss or its wavelength tuned incorrectly, sending an uplink wavelength tuning command to the ONU that has the signal loss or its wavelength tuned incorrectly, sending an uplink wavelength calibration command to the ONU that has the signal loss or its wavelength tuned incorrectly, sending a deactivation command to the ONU that has the signal loss or its wavelength tuned incorrectly, and sending a disabling command to the ONU that has the signal loss or its wavelength tuned incorrectly.

5. An apparatus for processing abnormal uplink data located in a first time wavelength division multiplexing, TWDM, channel terminal of a TWDM passive optical network, PON, comprising:
a first detecting module (52), arranged to detect abnormal uplink data;
a first sending module (54), arranged to send uplink data abnormality information to other TWDM channel terminals in the TWDM PON, wherein, the uplink data abnormality information is used for the other TWDM channel terminals detecting whether uplink data sent by an optical network unit, ONU, managed by the other TWDM channel terminals themselves are abnormal, and process an ONU sending abnormal uplink data when an abnormality is detected,
wherein, the first sending module (54) comprises:
a judging unit (62), arranged to judge whether an ONU identification of the ONU sending the abnormal uplink data is detected;
a first sending unit (64), arranged to: when a judgment result is yes, send the ONU identification to the other TWDM channel terminals in the TWDM PON; and/or, a second sending unit (66), arranged to: when the judgment result is no, send an indication identification for indicating the abnormal uplink data and/or an electrical signal corresponding to the abnormal uplink data to the other TWDM channel terminals,
the apparatus further comprises:
a first receiving module (72), arranged to: in the case that the first TWDM channel terminal sends an ONU identification to the other TWDM channel terminals, receive feedback information sent by a second TWDM channel terminal that processing on an abnormal ONU corresponding to the ONU identification has been completed, wherein, the second TWDM channel terminal has a function of identifying that the ONU is an ONU managed by the second TWDM channel terminal itself according to the ONU identification; and/or,
a second receiving module (74), arranged to: in the case that the first TWDM channel terminal sends an indication identification for indicating the abnormal uplink data or an electrical signal corresponding to the abnormal uplink data to the other TWDM channel terminals, receive feedback information sent by a third TWDM channel terminal that processing on the ONU which has a signal loss or its wavelength tuned incorrectly has been completed, wherein, the third TWDM channel terminal has a function of identifying that an ONU managed by the third TWDM channel terminal itself has a signal loss or is in a wavelength tuning error state.

6. The apparatus of claim 5, wherein,
a third receiving module (82) is arranged to: before sending the uplink data abnormality information to the other TWDM channel terminals in the TWDM PON, receive wavelength tuning information sent by a fourth TWDM channel terminal for performing wavelength tuning on an ONU that belongs to the fourth TWDM channel terminal, wherein, the wavelength tuning information carries an ONU identification of the ONU that is wavelength tuned;
a judging module (62) is arranged to judge whether the ONU of the fourth TWDM channel terminal that is wavelength tuned sends the abnormal uplink data on a channel corresponding to the first TWDM channel terminal according to the wavelength tuning information;
the first sending module (54) is further arranged to: when a judgment result of the judging module is yes, send the uplink data abnormality information to the fourth TWDM channel terminal.

7. An apparatus for processing abnormal uplink data located in a second time wavelength division multiplexing, TWDM, channel terminal of a TWDM passive optical network, PON, comprising:
a fourth receiving module (92), arranged to receive uplink data abnormality information sent by a first TWDM channel terminal, wherein, the uplink data abnormality information is used for indicating the second TWDM channel terminal to detect whether uplink data sent by an optical network unit, ONU, managed by the second TWDM channel terminal itself are abnormal, and when an abnormality is detected, process an ONU that sends abnormal uplink data;
a second detecting module (94), arranged to detect whether the uplink data sent by the ONU managed by the second TWDM channel terminal itself are abnormal according to the uplink data abnormality information;
a processing module (96), arranged to: in the case that the detecting module detects an abnormality, process the ONU that sends the abnormal uplink data,
and a transmitting module arranged to transmit feedback information to the first TWDM channel terminal, that indicates processing of the sent abnormal uplink data has been completed, the second detecting module (94) comprises at least one of:
a first detecting module (102), arranged to: in the case that the uplink data abnormality information is an ONU identification of the ONU sending the abnormal uplink data, detect whether the ONU sending the abnormal uplink data is an ONU managed by itself according to the ONU identification;
a second detecting module (104), arranged to: in the case that the uplink data abnormality information is an indication identification for indicating the abnormal uplink data or an electrical signal corresponding to the abnormal uplink data, detect whether the ONU sending the abnormal uplink data is an ONU managed by itself that has a signal loss or its wavelength tuned incorrectly.

8. The apparatus of claim 7, wherein, the processing module (96) comprises:
a first processing unit (112), arranged to: in the case that the second TWDM channel terminal detects that the ONU sending the abnormal uplink data is the ONU managed by the second TWDM channel terminal itself according to the ONU identification, the second TWDM channel terminal processing the ONU that sends the abnormal uplink data comprises at least one of: stopping allocating an uplink bandwidth to the ONU corresponding to the ONU identification, sending an uplink wavelength tuning command to the ONU corresponding to the ONU identification, sending an uplink wavelength calibration command to the ONU corresponding to the ONU identification, sending a deactivation command to the ONU corresponding to the ONU identification, sending a disabling command to the ONU corresponding to the ONU identification; and/or,
a second processing unit (114), arranged to: in the case that the second TWDM channel terminal detects that the ONU sending the abnormal uplink data is the ONU managed by the second TWDM channel terminal itself that has a signal loss or its wavelength tuned incorrectly, the second TWDM channel terminal processing the ONU sending the abnormal uplink data comprises at least one of: stopping allocating an uplink bandwidth to the ONU that has the signal loss or its wavelength tuned incorrectly, sending an uplink wavelength tuning command to the ONU that has the signal loss or its wavelength tuned incorrectly, sending an uplink wavelength calibration command to the ONU that has the signal loss or its wavelength tuned incorrectly, sending a deactivation command to the ONU that has the signal loss or its wavelength tuned incorrectly, and sending a disabling command to the ONU that has the signal loss or its wavelength tuned incorrectly.

## Patentansprüche

1. Verfahren zur Verarbeitung von abnormalen Uplink-Daten, aufweisend:
ein erstes Kanalendgerät mit Zeit-Wellenlängen-Multiplexverfahren, TWDM, eines passiven optischen TWDM-Netzwerks, PON, das abnormale Uplink-Daten erkennt (S302);
wobei das erste TWDM-Kanalendgerät Anomalie-Informationen von Uplink-Daten an andere TWDM-Kanalendgeräte in dem TWDM-PON sendet (S304), wobei die Anomalie-Informationen der Uplink-Daten für die anderen TWDM-Kanalendgeräte verwendet werden, die erkennen, ob Uplink-Daten, die von optischen Netzwerkeinheiten, ONUs, gesendet werden, die von den anderen TWDM-Kanalendgeräten selbst verwaltet werden, abnormal sind, und wenn eine Anomalie erkannt wird, eine ONU verarbeiten, die abnormale Uplink-Daten sendet;
wobei die Anomalie-Informationen der Uplink-Daten mindestens eines aufweisen von:
einer ONU-Kennung der ONU, die die abnormalen Uplink-Daten sendet, einer Meldungskennung zum Angeben der abnormalen Uplink-Daten und einem elektrischen Signal, das den abnormalen Uplink-Daten entspricht,
wobei das erste TWDM-Kanalendgerät, das die Anomalie-Informationen der Uplink-Daten an die anderen TWDM-Kanalendgeräte in dem TWDM-PON sendet, aufweist:
das erste TWDM-Kanalendgerät, das beurteilt, ob die ONU-Kennung der ONU, die die abnormalen Uplink-Daten sendet, erkannt wurde;
wenn ein Beurteilungsergebnis "Ja" lautet, Senden der ONU-Kennung durch das erste TWDM-Kanalendgerät an die anderen TWDM-Kanalendgeräte in dem TWDM-PON; und/oder wenn das Beurteilungsergebnis "Nein" lautet, Senden der Meldungskennung zum Angeben der abnormalen Uplink-Daten oder des elektrischen Signals, das den abnormalen Uplink-Daten entspricht, durch das erste TWDM-Kanalendgerät an die anderen TWDM-Kanalendgeräte,
nachdem das erste TWDM-Kanalendgerät die Anomalie-Informationen der Uplink-Daten an die anderen TWDM-Kanalendgeräte in dem TWDM-PON gesendet hat, wobei das Verfahren ferner aufweist:
in dem Fall, dass das erste TWDM-Kanalendgerät die ONU-Kennung an die anderen TWDM-Kanalendgeräte sendet, Empfangen von Rückmeldeinformationen, die von einem zweiten TWDM-Kanalendgerät gesendet werden, dass eine Verarbeitung an einer abnormalen ONU, die der ONU-Kennung entspricht, abgeschlossen worden ist, wobei das zweite TWDM-Kanalendgerät eine Funktion zum Identifizieren besitzt, dass die ONU gemäß der ONU-Kennung eine von dem zweiten TWDM-Kanalendgerät selbst verwaltete ONU ist; und/oder
in dem Fall, dass das erste TWDM-Kanalendgerät die Meldungskennung zum Angeben der abnormalen Uplink-Daten oder des elektrischen Signals, das den abnormalen Uplink-Daten entspricht, an die anderen TWDM-Kanalendgeräte sendet, Empfangen von Rückmeldeinformationen, die von einem dritten TWDM-Kanalendgerät gesendet werden, dass eine Verarbeitung an einer ONU, die einen Signalverlust aufweist oder deren Wellenlänge falsch abgestimmt ist, abgeschlossen worden ist, wobei das dritte TWDM-Kanalendgerät eine Funktion zum Identifizieren besitzt, dass eine ONU, die von dem dritten TWDM-Kanalendgerät selbst verwaltet wird, einen Signalverlust aufweist oder sich in einem Wellenlängen-Abstimmungsfehlerzustand befindet.

2. Verfahren nach Anspruch 1, wobei,
bevor das erste TWDM-Kanalendgerät die Anomalie-Informationen der Uplink-Daten zu den anderen TWDM-Kanalendgeräten in der TWDM-PON sendet, Wellenlängen-Abstimmungsinformationen empfangen werden, die von einem vierten TWDM-Kanalendgerät gesendet werden, um eine Wellenlängenabstimmung an der ONU auszuführen, die zu dem vierten TWDM-Kanalendgerät gehört, wobei die Wellenlängen-Abstimmungsinformationen eine ONU-Kennung der ONU führen, die wellenlängenabgestimmt ist;
das erste TWDM-Kanalendgerät beurteilt, ob die ONU des vierten TWDM-Kanalendgeräts, die wellenlängenabgestimmt ist, abnormale Uplink-Daten auf einem Kanal sendet, der dem ersten TWDM-Kanalendgerät gemäß den Wellenlängen-Abstimmungsinformationen entspricht;
wenn ein Beurteilungsergebnis "Ja" lautet, das erste TWDM-Kanalendgerät die Anomalie-Informationen der Uplink-Daten an das vierte TWDM-Kanalendgerät sendet.

3. Verfahren zur Verarbeitung von abnormalen Uplink-Daten, aufweisend:
ein zweites Kanalendgerät mit Zeit-Wellenlängen-Multiplexverfahren, TWDM, eines passiven optischen TWDM-Netzwerks, PON, das Anomalie-Informationen der Uplink-Daten empfängt (S402), die von einem ersten TWDM-Kanalendgerät gesendet wurden, wobei die Anomalie-Informationen der Uplink-Daten verwendet werden, um dem zweiten TWDM-Kanalendgerät ein Erkennen anzugeben, ob Uplink-Daten, die von einer optischen Netzwerkeinheit, ONU, gesendet werden, die von dem zweiten TWDM-Kanalendgerät selbst verwaltet werden, abnormal sind; und
eine ONU zu verarbeiten, die abnormale Uplink-Daten sendet, wenn eine Anomalie erkennt wird;
wobei das zweite TWDM-Kanalendgerät gemäß den Anomalie-Informationen der Uplink-Daten erkennt (S404), ob die Uplink-Daten, die von der ONU gesendet werden, die von dem zweiten TWDM-Kanalendgerät selbst verwaltet wird, abnormal sind;
wobei das zweite TWDM-Kanalendgerät die ONU verarbeitet (S406), die die abnormalen Uplink-Daten sendet, wenn eine Anomalie erkannt wird,
und Rückmeldeinformationen zu dem ersten TWDM-Kanalendgerät überträgt,
die angeben, dass die Verarbeitung der gesendeten abnormalen Uplink-Daten abgeschlossen ist, wobei das zweite TWDM-Kanalendgerät, das erkennt, ob die Uplink-Daten abnormal sind, die von der ONU gesendet wurden, die von dem zweiten TWDM-Kanalendgerät selbst verwaltet wird, gemäß den Anomalie-Informationen der Uplink-Daten mindestens eines aufweist von:
in dem Fall, dass die Anomalie-Informationen der Uplink-Daten eine ONU-Kennung der ONU ist, die die abnormalen Uplink-Daten sendet, Erkennen durch das zweite TWDM-Kanalendgerät, ob die ONU, die die abnormalen Uplink-Daten sendet, eine ONU ist, die durch das zweite TWDM-Kanalendgerät selbst gemäß der ONU-Kennung verwaltet wird;
in dem Fall, dass die Anomalie-Informationen der Uplink-Daten eine Meldungskennung zum Angeben von abnormalen Uplink-Daten oder eines elektrischen Signals sind, das den abnormalen Uplink-Daten entspricht, Erkennen durch das zweite TWDM-Kanalendgerät, ob die ONU, die die abnormalen Uplink-Daten sendet, eine durch das zweite TWDM-Kanalendgerät selbst verwaltete ONU ist, die einen Signalverlust aufweist oder deren Wellenlänge falsch abgestimmt ist.

4. Verfahren nach Anspruch 3, wobei
in dem Fall, dass das zweite TWDM-Kanalendgerät erkennt, dass die ONU, die die abnormalen Uplink-Daten sendet, die ONU ist, die durch das zweite TWDM-Kanalendgerät selbst gemäß der ONU-Kennung verwaltet wird, das zweite TWDM-Kanalendgerät, das die ONU verarbeitet, die die abnormalen Uplink-Daten sendet, mindestens eines aufweist von: Stoppen der Zuweisung einer Uplink-Bandbreite zu der ONU, die der ONU-Kennung entspricht, Senden eines Uplink-Wellenlängenabstimmungsbefehls an die ONU, die der ONU-Kennung entspricht, Senden eines Uplink-Wellenlängenkalibrierungsbefehls an die ONU, die der ONU-Kennung entspricht, Senden eines Deaktivierungsbefehls an die ONU, die der ONU-Kennung entspricht, Senden eines Ausschaltbefehls an die ONU, die der ONU-Kennung entspricht; und/oder in dem Fall, dass das zweite TWDM-Kanalendgerät erkennt, dass die ONU, die die abnormalen Uplink-Daten sendet, die durch das zweite TWDM-Kanalendgerät selbst verwaltete ONU ist, die den Signalverlust aufweist oder deren Wellenlänge falsch abgestimmt ist, das zweite TWDM-Kanalendgerät, das die ONU verarbeitet, die die abnormalen Uplink-Daten sendet, mindestens eines aufweist von: Stoppen der Zuweisung einer Uplink-Bandbreite zu der ONU, die Signalverlust aufweist oder deren Wellenlänge falsch abgestimmt ist, Senden eines Uplink-Wellenlängenabstimmungsbefehls an die ONU, die den Signalverlust aufweist oder deren Wellenlänge falsch abgestimmt ist, Senden eines Uplink-Wellenlängenkalibrierungsbefehls an die ONU, die den Signalverlust aufweist oder deren Wellenlänge falsch abgestimmt ist, Senden eines Deaktivierungsbefehls an die ONU, die den Signalverlust aufweist oder deren Wellenlänge falsch abgestimmt ist, und Senden eines Ausschaltbefehls an die ONU, die den Signalverlust aufweist oder deren Wellenlänge falsch abgestimmt ist.

5. Vorrichtung zum Verarbeiten von abnormalen Uplink-Daten, die sich in einem ersten Kanalendgerät mit Zeit-Wellenlängen-Multiplexverfahren, TWDM, eines passiven optischen TWDM-Netzwerks, PON, befinden, aufweisend:
ein erstes Erkennungsmodul (52), das angeordnet ist, um abnormale Uplink-Daten zu erkennen;
ein erstes Sendemodul (54), das angeordnet ist, um Anomalie-Informationen von Uplink-Daten an andere TWDM-Kanalendgeräte in dem TWDM-PON zu senden, wobei die Anomalie-Informationen der Uplink-Daten für die anderen TWDM-Kanalendgeräte zum Erkennen verwendet werden, ob Uplink-Daten, die von einer optischen Netzwerkeinheit, ONU, gesendet werden, die von den anderen TWDM-Kanalendgeräten selbst verwaltet werden, abnormal sind, und zum Verarbeiten einer ONU, die abnormale Uplink-Daten sendet, wenn eine Anomalie erkannt wird;
wobei das erste Sendemodul (54) aufweist:
eine Beurteilungseinheit (62), die angeordnet ist, um zu beurteilen, ob eine ONU-Kennung der ONU, die die abnormalen Uplink-Daten sendet, erkannt wurde;
eine erste Sendeeinheit (64), die angeordnet ist, um: wenn ein Beurteilungsergebnis "Ja" lautet, die ONU-Kennung an die anderen TWDM-Kanalendgeräte in dem TWDM-PON zu senden;
und/oder eine zweite Sendeeinheit (66), die angeordnet ist, um: wenn das Beurteilungsergebnis "Nein" lautet, eine Meldungskennung zum Angeben der abnormalen Uplink-Daten und/oder des elektrischen Signals, das den abnormalen Uplink-Daten entspricht, an die anderen TWDM-Kanalendgeräte zu senden,
wobei die Vorrichtung ferner aufweist:
ein erstes Empfangsmodul (72), das angeordnet ist, um: in dem Fall, dass das erste TWDM-Kanalendgerät eine ONU-Kennung an die anderen TWDM-Kanalendgeräte sendet, Rückmeldeinformationen zu empfangen, die von einem zweiten TWDM-Kanalendgerät gesendet werden, dass eine Verarbeitung an einer abnormalen ONU, die der ONU-Kennung entspricht, abgeschlossen worden ist, wobei das zweite TWDM-Kanalendgerät eine Funktion zum Identifizieren besitzt, dass die ONU gemäß der ONU-Kennung eine von dem zweiten TWDM-Kanalendgerät selbst verwaltete ONU ist; und/oder
ein zweites Empfangsmodul (74), das angeordnet ist, um: in dem Fall, dass das erste TWDM-Kanalendgerät eine Meldungskennung zum Angeben der abnormalen Uplink-Daten oder des elektrischen Signals, das den abnormalen Uplink-Daten entspricht, an die anderen TWDM-Kanalendgeräte sendet, Rückmeldeinformationen zu empfangen, die von einem dritten TWDM-Kanalendgerät gesendet werden, dass eine Verarbeitung an der ONU, die einen Signalverlust aufweist oder in der Wellenlänge falsch abgestimmt ist, abgeschlossen worden ist,
wobei das dritte TWDM-Kanalendgerät eine Funktion zum Identifizieren besitzt, dass eine von dem dritten TWDM-Kanalendgerät selbst verwaltete ONU einen Signalverlust aufweist oder sich in einem Wellenlängen-Abstimmungsfehlerzustand befindet.

6. Vorrichtung nach Anspruch 5, wobei
ein drittes Empfangsmodul (82) angeordnet ist, um: bevor die Anomalie-Informationen der Uplink-Daten an die anderen TWDM-Kanalendgeräte in der TWDM-PON gesendet werden, Wellenlängen-Abstimmungsinformationen zu empfangen, die von einem vierten TWDM-Kanalendgerät gesendet werden, um eine Wellenlängenabstimmung an einer ONU auszuführen, die zu dem vierten TWDM-Kanalendgerät gehört, wobei die Wellenlängen-Abstimmungsinformationen eine ONU-Kennung der ONU führen, die wellenlängenabgestimmt ist;
ein Beurteilungsmodul (62) angeordnet ist, um zu beurteilen, ob die ONU des vierten TWDM-Kanalendgeräts, die wellenlängenabgestimmt ist, die abnormalen Uplink-Daten auf einem Kanal sendet, der dem ersten TWDM-Kanalendgerät gemäß den Wellenlängen-Abstimmungsinformationen entspricht;
das erste Sendemodul (54) ferner angeordnet ist, um: die Anomalie-Informationen der Uplink-Daten an das vierte TWDM-Kanalendgerät zu senden, wenn ein Beurteilungsergebnis des Beurteilungsmoduls "Ja" lautet.

7. Vorrichtung zum Verarbeiten von abnormalen Uplink-Daten, die sich in einem zweiten Kanalendgerät mit Zeit-Wellenlängen-Multiplexverfahren, TWDM, eines passiven optischen TWDM-Netzwerks, PON, befinden, aufweisend:
ein viertes Empfangsmodul (92), das angeordnet ist, um Anomalie-Informationen von Uplink-Daten zu empfangen, die von einem ersten TWDM-Kanalendgerät gesendet wurden, wobei die Anomalie-Informationen der Uplink-Daten verwendet werden, um dem zweiten TWDM-Kanalendgerät anzugeben zu erkennen, ob Uplink-Daten, die von einer optischen Netzwerkeinheit, ONU, gesendet wurden, die von dem zweiten TWDM-Kanalendgerät selbst verwaltet wird, abnormal sind, und eine ONU zu verarbeiten, die abnormale Uplink-Daten sendet, wenn eine Anomalie erkannt wird;
ein zweites Erkennungsmodul (94), das angeordnet ist, um zu erkennen, ob die Uplink-Daten, die von der ONU gesendet werden, die von dem zweiten TWDM-Kanalendgerät selbst verwaltet wird, gemäß den Anomalie-Informationen der Uplink-Daten abnormal sind;
ein Verarbeitungsmodul (96), das angeordnet ist, um: die ONU zu verarbeiten, die die abnormalen Uplink-Daten in dem Fall sendet, dass das Erkennungsmodul eine Anomalie erkennt,
und ein Übertragungsmodul, das angeordnet ist, um Rückmeldeinformationen zu dem ersten TWDM-Kanalendgerät zu übertragen, das angibt, dass die Verarbeitung der gesendeten abnormalen Uplink-Daten abgeschlossen ist,
das zweite Erkennungsmodul (94) mindestens eines aufweist von:
einem ersten Erkennungsmodul (102), das angeordnet ist, um: in dem Fall, dass die Anomalie-Informationen der Uplink-Daten eine ONU-Kennung der ONU sind, die die abnormalen Uplink-Daten sendet, zu erkennen, ob die ONU, die die abnormalen Uplink-Daten sendet, eine ONU ist, die durch sich selbst gemäß der ONU-Kennung verwaltet wird;
ein zweites Erkennungsmodul (104), das angeordnet ist, um: in dem Fall, dass die Anomalie-Informationen der Uplink-Daten eine Meldungskennung zum Angeben der abnormalen Uplink-Daten oder eines elektrischen Signals sind, das den abnormalen Uplink-Daten entspricht, zu erkennen, ob die ONU, die die abnormalen Uplink-Daten sendet, eine durch sich selbst verwaltete ONU ist, die einen Signalverlust aufweist oder deren Wellenlänge falsch abgestimmt ist.

8. Vorrichtung nach Anspruch 7, wobei das Verarbeitungsmodul (96) aufweist:
eine erste Verarbeitungseinheit (112), die angeordnet ist, um: in dem Fall, dass das zweite TWDM-Kanalendgerät erkennt, dass die ONU, die die abnormalen Uplink-Daten sendet, die durch das zweite TWDM-Kanalendgerät selbst gemäß der ONU-Kennung verwaltete ONU ist, das zweite TWDM-Kanalendgerät, das die ONU verarbeitet, die die abnormalen Uplink-Daten sendet, mindestens eines aufweist von: Stoppen der Zuweisung einer Uplink-Bandbreite zu der ONU, die der ONU-Kennung entspricht, Senden eines Uplink-Wellenlängenabstimmungsbefehls an die ONU, die der ONU-Kennung entspricht, Senden eines Uplink-Wellenlängenkalibrierungsbefehls an die ONU, die der ONU-Kennung entspricht, Senden eines Deaktivierungsbefehls an die ONU, die der ONU-Kennung entspricht, Senden eines Ausschaltbefehls an die ONU, die der ONU-Kennung entspricht; und/oder
eine zweite Verarbeitungseinheit (114), die angeordnet ist, um: in dem Fall, dass das zweite TWDM-Kanalendgerät erkennt, dass die ONU, die die abnormalen Uplink-Daten sendet, die durch das zweite TWDM-Kanalendgerät selbst verwaltete ONU ist, die einen Signalverlust aufweist oder deren Wellenlänge falsch abgestimmt ist, das zweite TWDM-Kanalendgerät, das die ONU verarbeitet, die die abnormalen Uplink-Daten sendet, mindestens eines aufweist von: Stoppen der Zuweisung einer Uplink-Bandbreite zu der ONU, die den Signalverlust aufweist oder deren Wellenlänge falsch abgestimmt ist, Senden eines Uplink-Wellenlängenabstimmungsbefehls an die ONU, die den Signalverlust aufweist oder deren Wellenlänge falsch abgestimmt ist, Senden eines Uplink-Wellenlängenkalibrierungsbefehls an die ONU, die den Signalverlust aufweist oder deren Wellenlänge falsch abgestimmt ist, Senden eines Deaktivierungsbefehls an die ONU, die den Signalverlust aufweist oder deren Wellenlänge falsch abgestimmt ist, und Senden eines Ausschaltbefehls an die ONU, die den Signalverlust aufweist oder deren Wellenlänge falsch abgestimmt ist.

## Revendications

1. Procédé de traitement de données anormales en liaison montante, comprenant :
un premier terminal de canal en multiplexage par division de longueur d'onde temporelle, TWDM, d'un réseau optique passif, PON, TWDM détectant (S302) des données anormales en liaison montante ;
le premier terminal de canal TWDM envoyant (S304) une information d'anomalie de données en liaison montante à d'autres terminaux de canal TWDM sur le PON TWDM, dans lequel, l'information d'anomalie de données en liaison montante est utilisée pour les autres terminaux de canal TWDM détectant si des données en liaison montante envoyées par des unités de réseaux optiques, ONU, gérées par les autres terminaux de canal TWDM eux-mêmes sont anormales, et quand une anomalie est détectée, le traitement d'une ONU envoyant des données anormales en liaison montante ;
dans lequel, l'information d'anomalie de données en liaison montante comprend au moins l'un parmi : une identification d'ONU de l'ONU envoyant les données anormales en liaison montante, une identification d'indication permettant d'indiquer les données anormales en liaison montante, et un signal électrique correspondant aux données anormales en liaison montante,
dans lequel, le premier terminal de canal TWDM envoyant l'information d'anomalie de données en liaison montante aux autres terminaux de canal TWDM dans le PON TWDM comprend :
le premier terminal de canal TWDM jugeant si l'identification d'ONU de l'ONU envoyant les données anormales en liaison montante est détectée ;
quand un résultat de jugement est oui, le premier terminal de canal TWDM envoyant l'identification d'ONU aux autres terminaux de canal TWDM sur le PON TWDM ; et/ou, quand le résultat de jugement est non, le premier terminal de canal TWDM envoyant l'identification d'indication permettant d'indiquer les données anormales en liaison montante ou le signal électrique correspondant aux données anormales en liaison montante aux autres terminaux de canal TWDM,
après que le premier terminal de canal TWDM envoie l'information d'anomalie de données en liaison montanteaux autres terminaux de canal TWDM sur le PON TWDM, le procédé comprend en outre :
dans le cas où le premier terminal de canal TWDM envoie l'identification d'ONU aux autres terminaux de canal TWDM, la réception d'une information en retour envoyée par un deuxième terminal de canal TWDMque le traitement sur une ONU anormale correspondant à l'identification d'ONU a été terminé, dans lequel, le deuxième terminal de canal TWDM a une fonction d'identification que l'ONU est une ONU gérée par le deuxième terminal de canal TWDM lui-même en fonction de l'identification d'ONU ; et/ou,
dans le cas où le premier terminal de canal TWDM envoie l'identification d'indication permettant d'indiquer les données anormales en liaison montante ou le signal électrique correspondant aux données anormales en liaison montante aux autres terminaux de canal TWDM, la réception d'une information de retour envoyée par un troisième terminal de canal TWDM que le traitement sur une ONU qui présente une perte de signal ou est accordée en longueur d'onde de façon incorrecte a été terminé, dans lequel, le troisième terminal de canal TWDM a une fonction d'identification qu'une ONU gérée par le troisième terminal de canal TWDM lui-même présente une perte de signal ou est dans un état d'erreur d'accordement en longueur d'onde.

2. Procédé selon la revendication 1, dans lequel,
avant que le premier terminal de canal TWDM envoie l'information d'anomalie de données en liaison montante aux autres terminaux de canal TWDM sur le PON TWDM, une information d'accordement en longueur d'onde, envoyée par un quatrième terminal de canal TWDM, permettant d'exécuter un accordement en longueur d'onde sur l'ONU qui appartient au quatrième terminal de canal TWDM est reçue, dans lequel, l'information d'accordement en longueur d'onde porte une identification d'ONU de l'ONU qui est accordée en longueur d'onde ;
le premier terminal de canal TWDM juge si l'ONU du quatrième terminal de canal TWDM qui est accordée en longueur d'onde envoie des données anormales en liaison montante sur un canal correspondant au premier terminal de canal TWDM en fonction de l'information d'accordement en longueur d'onde ;
quand un résultat de jugement est oui, le premier terminal de canal TWDM envoie l'information d'anomalie de données en liaison montante au quatrième terminal de canal TWDM.

3. Procédé de traitement de données anormales en liaison montante, comprenant :
un deuxième terminal de canal en multiplexage par division de longueur d'onde temporelle, TWDM, d'un réseau optique passif, PON, TWDM recevant (S402) une information d'anomalie de données en liaison montante envoyée par un premier terminal de canal TWDM, dans lequel, l'information d'anomalie de données en liaison montante est utilisée pour indiquer le deuxième terminal de canal TWDM pour détecter si des données en liaison montante envoyées par un unité de réseau optique, ONU, gérée par le deuxième terminal de canal TWDM lui-même sont anormales, et
quand une anomalie est détectée, le traitement d'une ONU qui envoie des données de liaison montante anormales ;
le deuxième terminal de canal TWDM détectant (S404) si les données en liaison montante envoyées par l'ONU gérée par le deuxième terminal de canal TWDM lui-même sont anormales en fonction de l'information d'anomalie de données en liaison montante ;
quand une anomalie est détectée, le deuxième terminal de canal TWDM traitant (S406) l'ONU qui envoie les données anormales en liaison montante,
et transmet une information en retour au premier terminal de canal TWDM, qui indique que le traitement des données anormales en liaison montante envoyées a été terminé,
le deuxième terminal de canal TWDM détectant si les données en liaison montante envoyées par l'ONU gérée par le deuxième terminal de canal TWDM lui-même sont anormales en fonction de l'information d'anomalie de données en liaison montante comprend au moins l'un parmi :
dans le cas où l'information d'anomalie de données en liaison montante est une identification d'ONU de l'ONU envoyant les données anormales de liaison montante, le deuxième terminal de canal TWDM détectant si l'ONU envoyant les données anormales en liaison montante est une ONU gérée par le deuxième terminal de canal TWDM lui-même en fonction de l'identification d'ONU ;
dans le cas où l'information d'anomalie de données en liaison montante est une identification d'indication permettant d'indiquer les données anormales en liaison montante ou le signal électrique correspondant aux données anormales en liaison montante, le deuxième terminal de canal TWDM détectant si l'ONU envoyant les données anormales en liaison montante est une ONU gérée par le deuxième terminal de canal TWDM lui-même qui présente une perte de signal ou sa longueur d'onde accordée de façon incorrecte.

4. Procédé selon la revendication 3, dans lequel,
dans le cas où le deuxième terminal de canal TWDM détecte que l'ONU envoyant les données anormales en liaison montante est l'ONU gérée par le deuxième terminal de canal TWDM lui-même en fonction de l'identification d'ONU, le deuxième terminal de canal TWDM traitant l'ONU qui envoie les données anormales en liaison montante comprend au moins l'un parmi :
l'arrêt de l'affectation d'une largeur de bande en liaison montante à l'ONU correspondant à l'identification d'ONU, l'envoi d'une commande d'accordement en longueur d'onde en liaison montante à l'ONU correspondant à l'identification d'ONU, l'envoi d'une commande d'étalonnage en longueur d'onde en liaison montante à l'ONU correspondant à l'identification d'ONU, l'envoi d'une commande de mise en sommeil à l'ONU correspondant à l'identification d'ONU, l'envoi d'une commande de désactivation à l'ONU correspondant à l'identification d'ONU ; et/ou,
dans le cas où le deuxième terminal de canal TWDM détecte que l'ONU envoyant les données anormales en liaison montante est l'ONU gérée par le deuxième terminal de canal TWDM lui-même qui présente la perte de signal ou sa longueur d'onde accordée de façon incorrecte, le deuxième terminal de canal TWDM traitant l'ONU qui envoie les données anormales en liaison montante comprend au moins l'un parmi : l'arrêt de l'affectation d'une largeur de bande en liaison montante à l'ONU qui présente la perte de signal ou sa longueur d'onde accordée de façon incorrecte, l'envoi d'une commande d'accordement en longueur d'onde en liaison montante à l'ONU qui présente la perte de signal ou sa longueur d'onde accordée de façon incorrecte, l'envoi d'une commande d'étalonnage en longueur d'onde en liaison montante à l'ONU qui présente la perte de signal ou sa longueur d'onde accordée de façon incorrecte, l'envoi d'une commande de mise en sommeil à l'ONU qui présente la perte de signal ou sa longueur d'onde accordée de façon incorrecte, et l'envoi d'une commande de désactivation à l'ONU qui présente la perte de signal ou sa longueur d'onde accordée de façon incorrecte.

5. Dispositif de traitement de données anormales en liaison montante situées dans un premier terminal de canal en multiplexage par division de longueur d'onde temporelle, TWDM, d'un réseau optique passif, PON, TWDM, comprenant :
un premier module de détection (52), agencé pour détecter des données anormales en liaison montante ;
un premier module d'envoi (54), agencé pour envoyer une information d'anomalie de données en liaison montante à d'autres terminaux de canal TWDM sur le PON TWDM, dans lequel, l'information d'anomalie de données en liaison montante est utilisée pour les autres terminaux de canal TWDM détectant si des données en liaison montante envoyées par une unité de réseau optique, ONU, gérée par les autres terminaux de canal TWDM eux-mêmes sont anormales, et traiter une ONU envoyant des données anormales en liaison montante quand une anomalie est détectée,
dans lequel, le premier module d'envoi (54) comprend :
une unité de jugement (62), agencée pour juger si une identification d'ONU de l'ONU envoyant les données anormales en liaison montante est détectée ;
une première unité d'envoi (64), agencée pour : quand un résultat de jugement est oui, envoyer l'identification d'ONU aux autres terminaux de canal TWDM sur le PON TWDM ; et/ou, une deuxième unité d'envoi (66), agencée pour : quand le résultat de jugement est non, envoyer une identification d'indication permettant d'indiquer les données anormales en liaison montante et/ou un signal électrique correspondant aux données anormales en liaison montante aux autres terminaux de canal TWDM,
le dispositif comprend en outre :
un premier module de réception (72), agencé pour : dans le cas où le premier terminal de canal TWDM envoie une identification d'ONU aux autres terminaux de canal TWDM, recevoir une information de retour envoyée par un deuxième terminal de canal TWDM que le traitement sur une ONU anormale correspondant à l'identification d'ONU a été terminé, dans lequel, le deuxième terminal de canal TWDM a une fonction d'identification que l'ONU est une ONU gérée par le deuxième terminal de canal TWDM lui-même en fonction de l'identification d'ONU ; et/ou,
un deuxième module de réception (74) agencé pour : dans le cas où le premier terminal de canal TWDM envoie une identification d'indication permettant d'indiquer les données anormales en liaison montante ou un signal électrique correspondant aux données anormales en liaison montante aux autres terminaux de canal TWDM, recevoir une information de retour envoyée par un troisième terminal de canal TWDM que le traitement sur l'ONU qui présente une perte de signal ou sa longueur d'onde accordée de façon incorrecte a été terminé, dans lequel, le troisième terminal de canal TWDM a une fonction d'identification qu'une ONU gérée par le troisième terminal de canal TWDM lui-même présente une perte de signal ou est dans un état d'erreur d'accordement en longueur d'onde.

6. Dispositif selon la revendication 5, dans lequel,
un troisième module de réception (82) est agencé pour : avant l'envoi de l'information d'anomalie de données en liaison montante aux autres terminaux de canal TWDM sur le PON TWDM, recevoir une information d'accordement en longueur d'onde envoyée par un quatrième terminal de canal TWDM, permettant d'exécuter un accordement en longueur d'onde sur une ONU qui appartient au quatrième terminal de canal TWDM, dans lequel, l'information d'accordement en longueur d'onde porte une identification d'ONU de l'ONU qui est accordée en longueur d'onde ; un module de jugement (62) est agencé pour juger si l'ONU du quatrième terminal de canal TWDM qui est accordée en longueur d'onde envoie les données anormales en liaison montante sur un canal correspondant au premier terminal de canal TWDM en fonction de l'information d'accordement en longueur d'onde ;
le premier module d'envoi (54) est en outre agencé pour : quand un résultat de jugement du module de jugement est oui, envoyer l'information d'anomalie de données en liaison montante au quatrième terminal de canal TWDM.

7. Dispositif de traitement de données anormales en liaison montante situé dans un deuxième terminal de canal en multiplexage par division de longueur d'onde temporelle, TWDM, d'un réseau optique passif, PON, TWDM, comprenant :
un quatrième module de réception (92), agencé pour recevoir une information d'anomalie de données en liaison montante envoyée par un premier terminal de canal TWDM, dans lequel, l'information d'anomalie de données en liaison montante est utilisée pour indiquer au deuxième terminal de canal TWDM de détecter si des données en liaison montante envoyées par une unité de réseau optique, ONU, gérée par le deuxième terminal de canal TWDM lui-même sont anormales, et quand une anomalie est détectée, traiter une ONU qui envoie des données anormales en liaison montante ;
un deuxième module de détection (94), agencé pour détecter si les données en liaison montante envoyées par l'ONU gérée par le deuxième terminal de canal TWDM lui-même sont anormales en fonction de l'information d'anomalie de données en liaison montante ;
un module de traitement (96), agencé pour : dans le cas où le module de détection détecte une anomalie, traiter l'ONU qui envoie les données anormales en liaison montante,
et un module de transmission agencé pour transmettre une information en retour au premier terminal de canal TWDM, qui indique que le traitement des données anormales en liaison montante envoyées a été terminé,
le deuxième module de détection (94) comprend au moins l'un parmi : un premier module de détection (102), agencé pour : dans le cas où l'information d'anomalie de données en liaison montante est une identification d'ONU de l'ONU envoyant les données anormales en liaison montante, détecter si l'ONU envoyant les données anormales en liaison montante est une ONU gérée par elle-même en fonction de l'identification d'ONU ;
un deuxième module de détection (104), agencé pour : dans le cas où l'information d'anomalie de données en liaison montante est une identification d'indication permettant d'indiquer les données anormales en liaison montante ou un signal électrique correspondant aux données anormales en liaison montante, détecter si l'ONU envoyant les données anormales en liaison montante est une ONU gérée par elle-même qui présente une perte de signal ou sa longueur d'onde accordée de façon incorrecte.

8. Dispositif selon la revendication 7, dans lequel, le module de traitement (96) comprend :
une première unité de traitement (112), agencée pour : dans le cas où le deuxième terminal de canal TWDM détecte que l'ONU envoyant les données anormales en liaison montante est l'ONU gérée par le deuxième terminal de canal TWDM lui-même en fonction de l'identification d'ONU, le deuxième terminal de canal TWDMtraitant l'ONU qui envoie les données anormales en liaison montante comprend au moins l'un parmi : l'arrêt de l'affectation d'une largeur de bande en liaison montante à l'ONU correspondant à l'identification d'ONU, l'envoi d'une commande d'accordement en longueur d'onde en liaison montante à l'ONU correspondant à l'identification d'ONU, l'envoi d'une commande d'étalonnage en longueur d'onde en liaison montante à l'ONU correspondant à l'identification d'ONU, l'envoi d'une commande de mise en sommeil à l'ONU correspondant à l'identification d'ONU, l'envoi d'une commande de désactivation à l'ONU correspondant à l'identification d'ONU ; et/ou,
une deuxième unité de traitement (114), agencée pour : dans le cas où le deuxième terminal de canal TWDM détecte que l'ONU envoyant les données anormales en liaison montante est l'ONU gérée par le deuxième terminal de canal TWDM lui-même qui présente une perte de signal ou sa longueur d'onde accordée de façon incorrecte, le deuxième terminal de canal TWDM traitant l'ONU envoyant les données anormales en liaison montante comprend au moins l'un parmi : l'arrêt de l'affectation d'une largeur de bande en liaison montante à l'ONU qui présente la perte de signal ou sa longueur d'onde accordée de façon incorrecte, l'envoi d'une commande d'accordement en longueur d'onde en liaison montante à l'ONU qui présente la perte de signal ou sa longueur d'onde accordée de façon incorrecte, l'envoi d'une commande d'étalonnage en longueur d'onde en liaison montante à l'ONU qui présente la perte de signal ou sa longueur d'onde accordée de manière incorrecte, l'envoi d'une commande de mise en sommeil à l'ONU qui présente la perte de signal ou sa longueur d'onde accordée de façon incorrecte, et l'envoi d'une commande de désactivation à l'ONU qui présente la perte de signal ou sa longueur d'onde accordée de façon incorrecte.
